# EUROPEAN PATENT APPLICATION

(11) **EP 4 738 929 A1**
(43) Date of publication of application: **06.05.2026**
(21) Application number: 23942811.3
(22) Date of filing: 28.06.2023
(51) Int. Cl.: H04W 36/30, H04W 64/00

(54) **METHOD AND DEVICE FOR WIRELESS COMMUNICATION**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: RGTH
(86) International application number: PCT/CN2023/103422
(87) International publication number: WO 2025/000294

(57) **Abstract**

The present application provides a method for wireless communication. The method comprises: a first device sends first information to a second device, wherein the first information is used for indicating a first prediction value of a first cell, and the first cell is a current serving cell of a terminal device and/or a neighboring cell of the serving cell. According to the embodiments of the present application, a measurement result of some or all of measurement targets is predicted (a prediction value of the measurement result is the first prediction value), thereby facilitating reduction of the energy consumption of the first device and reduction of a delay of obtaining the measurement result.

## Description

### TECHNICAL FIELD

This application relates to the field of communications technologies, and more specifically, to a wireless communication method and device.

### BACKGROUND

In order to implement mobility management for a terminal device, the terminal device usually needs to measure related parameters. For example, the terminal device may simultaneously measure a plurality of frequencies, to improve rationality of mobility management. However, a continuous multi-frequency measurement process causes problems of energy consumption of the terminal device and a delay in reporting a measurement result.

### SUMMARY

This application provides a wireless communication method and device. The following describes aspects related to this application.

According to a first aspect, a wireless communication method is provided, including: transmitting, by a first device, first information to a second device, where the first information is used to indicate a first predicted value of a first cell, and the first cell is a current serving cell of a terminal device and/or a neighboring cell of the serving cell.

According to a second aspect, a wireless communication method is provided, including: receiving, by a second device, first information transmitted by a first device, where the first information is used to indicate a first predicted value of a first cell, and the first cell is a current serving cell of a terminal device and/or a neighboring cell of the serving cell.

According to a third aspect, a wireless communication device is provided, where the wireless communication device is a first device, and the device includes: a transmitting unit, configured to transmit first information to a second device, where the first information is used to indicate a first predicted value of a first cell, and the first cell is a current serving cell of a terminal device and/or a neighboring cell of the serving cell.

According to a fourth aspect, a wireless communication device is provided, where the wireless communication device is a second device, and the device includes: a receiving unit, configured to receive first information transmitted by a first device, where the first information is used to indicate a first predicted value of a first cell, and the first cell is a current serving cell of a terminal device and/or a neighboring cell of the serving cell.

According to a fifth aspect, a wireless communication device is provided, including a memory and a processor. The memory is configured to store a program, and the processor is configured to invoke the program in the memory, so that the device executes a part or all of the steps in the method according to the first aspect or the second aspect.

According to a sixth aspect, a wireless communication device is provided, including a processor, configured to invoke a program from a memory, so that the device executes a part or all of the steps in the method according to the first aspect or the second aspect.

According to a seventh aspect, a chip is provided, including a processor, configured to invoke a program from a memory, so that the chip executes a part or all of the steps in the method according to the first aspect or the second aspect.

According to an eighth aspect, a computer-readable storage medium is provided, where the computer-readable storage medium stores a program, and the program causes a wireless communication device to execute a part or all of the steps in the method according to the first aspect or the second aspect.

According to a ninth aspect, a computer program product is provided, where the computer program product includes a non-transitory computer-readable storage medium storing a computer program, and the computer program is operable to cause a communication device to execute a part or all of the steps in the method according to the various aspects described above. In some implementations, the computer program product may be a software installation package.

According to a tenth aspect, a computer program is provided, where the computer program causes a wireless communication device to execute a part or all of the steps in the method according to the first aspect or the second aspect.

In embodiments of this application, a measurement result of a part or all of measurement objects (a predicted value of the measurement result is the first predicted value) is predicted, thereby facilitating reducing energy consumption of the first device, and reducing a delay in obtaining the measurement result.

### BRIEF DESCRIPTION OF DRAWINGS

FIG. 1 shows a wireless communications system to which embodiments of this application are applicable.
FIG. 2 is a schematic diagram of a neural network to which an embodiment of this application is applicable.
FIG. 3 is a schematic diagram of a convolutional neural network to which an embodiment of this application is applicable.
FIG. 4 is a schematic flowchart of a communication method according to an embodiment of this application.
FIG. 5 is a schematic diagram of a wireless communication device according to an embodiment of this application.
FIG. 6 is a schematic diagram of another wireless communication device according to an embodiment of this application.
FIG. 7 is a schematic structural diagram of a communication apparatus according to an embodiment of this application.

### DESCRIPTION OF EMBODIMENTS

Technical solutions in this application are described below with reference to the accompanying drawings.

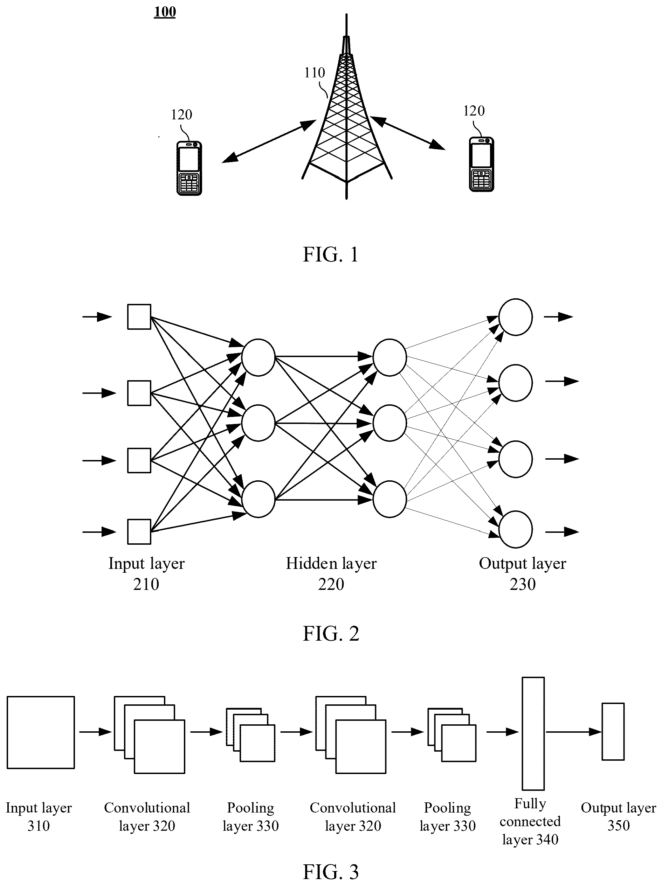

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may be further applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device), a core network device, a model monitoring and management device, or an operation administration and maintenance (operation administration and maintenance, OAM) device that connects the terminal device to a wireless network. The base station may broadly cover the following various names, or may be interchanged with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a centralized unit-control plane (centralized unit-control plane, CU-CP) positioning node, and a centralized unit-user plane (centralized unit-user plane, CU-UP) positioning node. The core network device may broadly cover the following various names, or may be interchanged with the following names, such as a location management function (location management function, LMF) network element, a network slice selection function (network slice selection function, NSSF), an authentication server function (authentication server function, AUSF), unified data management (unified data management, UDM), an access and mobility management function (access and mobility management function, AMF), a session management function (session management function, SMF), a policy control function (policy control function, PCF), a user plane function (user plane function, UPF), a sensing function (sensing function, SF), and a network data analytics function (network data analytics function, NWDAF) network element.

The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks with a same access technology or different access technologies. A specific technology and a specific device form used by the network device are not limited in embodiments of this application. The base station may be a fixed or mobile base station. For example, a helicopter or an uncrewed aerial vehicle may be configured to function as a mobile base station, and one or more cells may move based on a position of the mobile base station. In another example, a helicopter or an uncrewed aerial vehicle may be configured to function as a device communicating with another base station.

The base station may be a fixed or mobile base station. For example, a helicopter or an uncrewed aerial vehicle may be configured to function as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

It should be understood that all or part of functions of the communication device in this application may also be implemented by software functions running on hardware, or by virtualization functions instantiated on a platform (for example, a cloud platform).

### Artificial Intelligence (artificial intelligence, AI)

In recent years, artificial intelligence research represented by a neural network has made great achievements in many fields, and will also play an important role in people's production and life for a long time in the future.

FIG. 2 is a schematic diagram of a neural network to which an embodiment of this application is applicable. Layers of the neural network shown in FIG. 2 may be classified into three types according to locations of different layers: an input layer 210, a hidden layer 220, and an output layer 230. Generally, the first layer is the input layer 210, the last layer is the output layer 230, and a middle layer between the first layer and the last layer is the hidden layer 220. A sample may be input from the input layer 210 and processed by the hidden layer 220, and a final result is generated at the output layer 230. Each node in the neural network represents one processing unit. It may be considered that a neuron is simulated, a plurality of neurons form a layer of neural network, and multi-layer information transfer and processing constitute a whole neural network.

With the continuous development of neural network researches, a neural network deep learning algorithm has also been proposed in recent years, with more hidden layers introduced. Feature learning is achieved through layer-by-layer training of the neural network with a plurality of hidden layers, which greatly improves learning and processing capabilities of the neural network, and the feature learning is widely used in pattern recognition, signal processing, combinatorial optimization, and anomaly detection.

Likewise, with the development of deep learning, convolutional neural networks have been further studied. FIG. 3 is a schematic diagram of a convolutional neural network to which an embodiment of this application is applicable. A basic structure of the convolutional neural network may include: an input layer 310, a plurality of convolutional layers 320, a plurality of pooling layers 330, a fully connected layer 340, and an output layer 350. The convolutional layers 320 and the pooling layers 320 are introduced, so that dramatic increase of network parameters is controlled effectively, a quantity of parameters is limited, and features of a local structure are mined, thereby improving robustness of an algorithm.

In R18, a plurality of use cases for applying AI to wireless communication are proposed. For example, an AI/machine learning (machine learning, ML) technology is used to compress and decompress channel state information (channel state information, CSI), to reduce air interface transmission overheads and improve accuracy of CSI feedback information. The AI/ML technology is used to predict beam information in time domain and space domain, to improve beam selection accuracy. The AI/ML technology is used to predict UE location information, to improve accuracy of terminal device location information in non-line of sight (non-line of sight, NLOS) propagation scenarios and the like.

The following mainly describes cell handover in mobility management.

### Cell handover

Cell handover is performed to improve continuity of a service provided by a communications system for a terminal device. In a wireless communications system, a terminal device may move from one cell (also referred to as a "source cell") to another cell (also referred to as a "target cell"). The cell may be a PCell or a primary secondary cell PSCell. A cell handover mechanism usually relies on a radio resource measurement (radio resource measurement, RRM) process.

For a conventional handover mechanism (which may also be referred to as immediate handover), to improve continuity of a service provided by a communications system for a terminal device in a connected state, a network device transmits an immediate handover command to the terminal device in an appropriate occasion (for example, a signal measurement result of the terminal device in a serving cell is less than a threshold), to instruct the terminal device to perform cell handover. In the conventional handover mechanism, the immediate handover command may be used to instruct the terminal device to hand over from a source cell to a target cell. For example, the immediate handover command may include an identifier of the target cell and configuration information of the target cell, so that the terminal device accesses the target cell by using a configuration of the target cell. In some implementations, the immediate handover command may be understood as a conventional handover message, or may be an RRC reconfiguration message including synchronous reconfiguration information.

For a conditional handover mechanism, the network device may transmit conditional handover configuration information to the terminal device, so as to configure, for the terminal device, configuration information associated with at least one conditional handover candidate cell. Correspondingly, after receiving the conditional handover configuration information, the terminal device starts to execute a conditional handover evaluation process (that is, start to execute a handover condition evaluation task related to conditional handover) so as to evaluate whether a handover condition associated with the at least one conditional handover candidate cell is met. When the handover condition associated with the at least one conditional handover candidate cell is met, the terminal device may select a conditional handover candidate cell meeting the handover condition to initiate a handover procedure, so as to hand over from the source cell (or referred to as the "current serving cell") to the selected conditional handover candidate cell meeting the handover condition (the selected conditional handover candidate cell meeting the handover condition may also be referred to as the "target cell").

### RRM measurement

A purpose of RRM measurement is to implement radio resource management. In some implementations, the terminal device may perform RRM measurement on an SSB and/or a CSI-RS transmitted by the network device, to obtain an RRM measurement result.

Types of RRM measurement include intra-frequency measurement and inter-frequency or inter-RAT (inter-RAT) measurement.

It should be noted that the foregoing RRM measurement result is used to indicate communication quality of the terminal device. In some implementations, the RRM measurement result may include one or more of the following measurement quantities: signal amplitude (Srxlev), signal strength (Squal), reference signal received power (reference signal received power, RSRP), reference signal received quality (reference signal received quality, RSRQ), signal to noise ratio (signal to noise ratio, SNR), signal to interference plus noise ratio (signal to interference plus noise ratio, SINR), received signal strength indication (received signal strength indication) RSSI, and the like.

For a terminal in the connected state, a measurement process may be performed to control a cell handover process of the terminal device. For example, a signal measurement result of at least one neighboring cell may be obtained by performing the measurement process, and the measurement result is reported to the network device when a configuration condition is met. The network device may control the cell handover procedure of the terminal based on the measurement result reported by the terminal device.

To enable the terminal device in the connected state to selectively perform the measurement process, the network device usually configures one or more measurement frequencies for the terminal device. For example, the network device may configure one or more measurement objects (measurement object, MO) for the terminal device by using dedicated signaling, where configuration information of each MO may include target measurement frequency information.

Because movement of the terminal device is random, an L3 measurement process generally requires the terminal device to measure a plurality of measurement objects at the same time, or requires the terminal device to measure a plurality of frequencies at the same time. When a measurement reporting event is met, the terminal device may report the measurement result to the network device, so that the network device determines which cell is a more suitable to serve as a target cell to be handed over of the terminal device. That is, a target cell to be handed over of the terminal device is determined based on measurement results of a plurality of frequencies, thereby facilitating improving rationality of the target cell.

However, a continuous multi-frequency measurement process results in many problems. For example, the multi-frequency measurement process is continuously performed, causing large energy consumption, which is not conducive to power saving of the terminal device, and may affect battery life experience of a user. For another example, usually the terminal device reports a measurement result to the network device only after continuous multi-frequency measurement is completed, which easily causes a delay in measurement reporting, and may cause a delay in determining the target cell by the network device.

To solve the foregoing problem, an embodiment of this application provides a wireless communication method. A first device predicts a measurement result of a part or all of measurement objects (a predicted value of the measurement result is a first predicted value) instead of a measurement process of the measurement objects, thereby facilitating reducing energy consumption of the first device and reducing a delay in obtaining a measurement result.

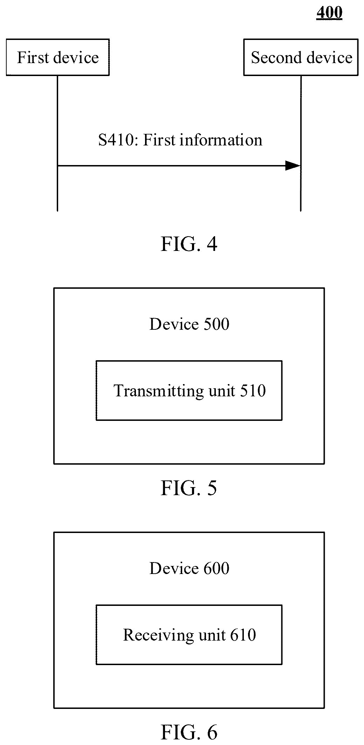

The following describes a wireless communication method provided in an embodiment of this application with reference to FIG. 4. The method in FIG. 4 is described from a perspective of interaction between a first device and a second device. The first device and the second device may be any types of network devices and terminal devices mentioned above. For example, the first device is a first terminal device, and the second device may be a network device or a second terminal device. For another example, the first device is a first network device, and the second device may be a terminal device or a second network device. The network device may be an access network device, a core network device, a model monitoring and management device, or an OAM device.

Referring to FIG. 4, in step S410: the first device transmits first information to the second device. Alternatively, the second device receives the first information transmitted by the first device. The first information may be used to indicate a first predicted value of a first cell.

As described above, in a cell handover process, a target cell may be determined based on a measurement result of a current serving cell and a measurement result of a neighboring cell. Therefore, in some embodiments, the first cell may be a serving cell and/or a neighboring cell. That is, the first cell may be a serving cell or a neighboring cell, and alternatively the first cell may include a serving cell and a neighboring cell. The serving cell may be a current serving cell of a terminal device, and the neighboring cell may be a neighboring cell of the current serving cell of the terminal device.

The first predicted value may be a predicted value of one or more parameters. For example, the one or more parameters may be the measurement quantity in the RRM measurement described above, that is, the first predicted value may be a predicted value of the measurement quantity described above.

It should be noted that a measured value mentioned later may refer to an actual measurement result, for example, may be a measurement result of the foregoing one or more parameters. The predicted value mentioned later may be a predicted value of the measurement result, for example, may be a predicted value of the measurement result of the foregoing one or more parameters.

In some embodiments, the first predicted value may include one or more of the following information: a predicted value at a current instant; a predicted value at one or more past instants; or a predicted value at one or more future instants.

As described above, usually the target cell may be determined based on a measured value of a measurement object at the current instant. Therefore, the first predicted value may include the predicted value at the current instant. In this way, the terminal device may partially execute or not need to execute a measurement process of the measurement object at the current instant, thereby facilitating reducing energy consumption of the first device, and reducing a delay in obtaining a measurement result.

In some cases, for example, signal quality of the current serving cell gradually deteriorates, the predicted value may need to be reported immediately. However, it usually takes a particular time to obtain the predicted value at the current instant. Therefore, in order to ensure continuity of a service provided by a communications system for the terminal device, the first predicted value may include a predicted value at one or more past instants. A predicted value at the current instant and/or at one or more future instants is deduced based on measured values and/or predicted values in a past period of time, thereby facilitating reducing measurement overheads and energy consumption of the terminal device. Further, measurement results are reported in advance under a special condition (for example, the signal quality of the serving cell deteriorates gradually), thereby facilitating reducing radio link failures or handover failures caused by delayed reporting of measurement results.

As described above, a measurement enabling condition may be that a measurement result of the serving cell of the terminal device is lower than a threshold, that is, the signal quality of the serving cell may gradually deteriorate when the measurement process is being performed. To assist the second device in determining a suitable target cell as soon as possible and avoid a radio link failure or a handover failure, a measurement result at one or more future instants may be predicted in advance, so as to assist the second device in predetermining the target cell. In other words, the first predicted value may include a predicted value at one or more future instants, thereby facilitating determining a suitable target cell as soon as possible by the second device.

In some embodiments, the first predicted value may include a plurality of types of the foregoing information. For example, the first predicted value may include a predicted value at a current instant and a predicted value at one or more past instants. For another example, the first predicted value may include a predicted value at a current instant and a predicted value at one or more future instants. For still another example, the first predicted value may include a predicted value at one or more past instants, a predicted value at a current instant, and a predicted value at one or more future instants. Generally, measurement results at a plurality of instants in a period of time are predicted, thereby facilitating determining a time-domain change trend of the measurement result by the seond device, thus determining an appropriate target cell more accurately.

In some embodiments, the first predicted value may include a cell-level predicted value and/or a beam-level predicted value. That is, the first predicted value may include a cell-level predicted value or a beam-level predicted value, or the first predicted value may include both a cell-level predicted value and a beam-level predicted value. The cell-level predicted value may be a predicted value of a measurement result at one or more instants of a cell, and the beam-level predicted value may be a predicted value of a measurement result at one or more instants of a beam.

In some embodiments, the cell-level predicted value may include one or more of: a cell-level predicted value at a current instant, a cell-level predicted value at one or more past instants, or a cell-level predicted value at one or more future instants. In some other embodiments, the beam-level predicted value may include one or more of: a beam-level predicted value at a current instant, a beam-level predicted value at one or more past instants, or a beam-level predicted value at one or more future instants.

It should be noted that the first cell may include a plurality of beams. Therefore, a cell-level measured value or a cell-level predicted value of the first cell may be determined based on a measurement result of beams of the first cell and/or a predicted value of the measurement result. For example, the cell-level measured value of the first cell may be a combined result of measurement results of beams of the first cell. For another example, the cell-level predicted value of the first cell may be a combined result of a measurement result of a part of some beams of the first cell and a prediction result of a part of beams of the first cell.

The following separately describes, in detail, content related to the cell-level predicted value and the beam-level predicted value.

In some embodiments, a cell-level predicted value at a first instant, for example, a cell-level predicted value of the first cell at the first instant, may be determined based on one or more of the following information: cell-level measured values and/or cell-level predicted values of the first cell at past K1 instants relative to the first instant; measured values of a part of beams of the first cell and/or predicted values of a part of beams of the first cell at past K1 instants relative to the first instant; or a measured value of a part of beams of the first cell and/or predicted value of a part of beams of the first cell at the first instant, where K1 is a natural number greater than or equal to 1. The first instant is any one of one or more instants associated with the first predicted value.

The cell-level measured values of the first cell at the past K1 instants may indicate that a cell-level result at any one of the past K1 instants is a real measurement result. The real cell-level measurement result at any instant may be a combined result of one or more beam measurement results of the first cell at the instant.

The cell-level predicted values of the first cell at the past K1 instants may indicate that a cell-level result at any one of the past K1 instants is a predicted result. For example, a cell-level predicted value at any instant may be a combined result of beam-level results of the first cell at the instant. The beam-level results mentioned herein may include a measured value of a part of beams and a predicted value of a part of beams, or include predicted values of all beams. In an example, beam-level results of the first cell at any one of the past K1 instants include a beam measured value and a beam predicted value.

In some embodiments, the cell-level predicted value at the first instant may be determined based on one or more of the foregoing types of information by using AI inference, for example, AI model inference.

The first instant may be any one of one or more instants associated with the first predicted value. The first predicted value mentioned above may include one or more of: a predicted value at the current instant, a predicted value of one or more past instants, or a predicted value at one or more future instants. In this case, the one or more instants associated with the first predicted value may include one or more of: the current instant, the one or more past instants, and the one or more future instants. Therefore, the first instant may be any one of a current instant, one or more past instants, or one or more future instants. If the first predicted value includes the predicted value at the current instant, the first instant may be the current instant; if the first predicted value includes the predicted value at the one or more past instants, the first instant may be any one of the past one or more past instants; or if the first predicted value includes the predicted value at the one or more future instants, the first instant may be any one of the one or more future instants.

An example in which the first instant is the current instant is used to describe a method for determining the cell-level predicted value (that is, a cell-level predicted value at the current instant) of the first cell at the first instant.

The cell-level predicted value of the first cell at the first instant may be obtained in a pluratity of manners.

In some embodiments, the cell-level predicted value of the first cell at the first instant may be determined based on cell-level measured values of the first cell at past K1 instants.

For example, the cell-level measured values of the first cell at the past instants K1 may be a combined result of measured values of beams of the first cell at the past instants K1. If K1 = 3, measured values of beams of the first cell at past three instants may be combined, to obtain cell-level measured values at the three instants, that is, real cell-level measurement results at the three instants. In an example, real measurement results of four, five, and six beams of the first cell that are respectively measured at the three instants may be combined, to obtain cell-level measurement results R1, R2, and R3 of the first cell at the three instants. Then, the cell-level predicted value of the first cell at the first instant is deduced based on R1, R2, and R3. That is, R1 may be a combined result of real measurement results of the four beams of the first cell at a respective instant, R2 may be a combined result of real measurement results of the five beams of the first cell at a respective instant, and R3 may be a combined result of real measurement results of the six beams of the first cell at a respective instant.

In some embodiments, the cell-level predicted value of the first cell at the first instant may be determined based on cell-level predicted values of the first cell at past K1 instants, thereby reducing energy consumption of the terminal device. This implementation may not rely on a measured value of a part of beams at the current instant, and has a wide application scope.

If K1 = 3, measured values of a part of beams of the first cell are respectively obtained at past three instants, predicted values of remaining beams of the first cell may be deduced based on the measured values of the part of beams. A measured value of a part of beams of the first cell at any one of the past K1 instants and predicted values of remaining beams may be combined to obtain a cell-level predicted value at this instant, that is, cell-level predicted values of the first cell at the past K1 instants may be obtained.

In an example, if the first cell has eight beams available, measured values of four beams of the first cell are respectively obtained at the past three instants (measured values of the four beams at each of the past three instants), predicted values of the remaining four beams at each of the past three instants may be deduced based on the measured values of the four beams at each of the past three instants. Measured values of four beams at each of the past three instants and predicted values of remaining four beams at each of the past three instants may be separately combined to obtain cell-level predicted values at the past three instants, which may be represented, for example, by R4, R5, and R6. Then, the cell-level predicted value of the first cell at the first instant is deduced based on R4, R5, and R6. That is, R4 may be obtained by combining measured values of four beams and predicted values of the remaining four beams at a corresponding instant. Manners of obtaining R5 and R6 are similar to the manner of obtaining R4, and for brevity, details are not described herein again.

In some embodiments, the cell-level predicted value of the first cell at the first instant may be determined based on measured values of a part of beams of the first cell at the past K1 instants and a measured value of a part of beams at the first instant. This implementation is based on a part of actual measurement results at the first instant, thereby facilitating improving accuracy of the cell-level predicted value.

For example, first, based on measured values of a part of beams at the past K1 instants, predicted values of a part of beams (which may also be referred to as predicted values of the remaining beams) at the past K1 instants may be obtained. Then, predicted values of the remaining beams at the first instant may be determined based on the predicted values of the remaining beams at the past K1 instants. Finally, the cell-level predicted value of the first cell at the first instant may be determined based on a measured value of a part of beams at the first instant and the predicted values of the remaining beams at the first instant.

In order to simplify the foregoing prediction process, the cell-level predicted value of the first cell at the first instant may be directly determined based on measured values of a part of beams of the first cell at the past K1 instants, and predicted values of a part of beams at the past K1 instants, a measured value of a part of beams at the first instant and a predicted value of a part of beams at the first instant.

In some embodiments, the cell-level predicted value of the first cell at the first instant may be determined based on a measured value of a part of beams at the first instantIn this implementation, the cell-level prediction value is determined based on an actual measurement result at the first instant, thereby improving accuracy of the cell-level predicted value, and reducing resource overheads for transmitting a reference signal.

For example, based on a measured value of a part of beams at the first instant, predicted values of the remaining beams of the first cell at the first instant may be first obtained by AI inference. Then, the measured value of a part of beams at the first instant and the predicted values of the remaining beams of the first cell at the first instant may be combined to obtain the cell-level predicted values of the first cell at the first instant.

It should be noted that K1 may be a fixed-value parameter or a specific value of a parameter range. If K1 is a fixed-value parameter, K1 may be configured in a protocol-predefined manner, or through a system broadcast message or dedicated signaling (for example, the first device receives configuration information transmitted by the second device, where the configuration information includes the K1 parameter). If K1 is a specific value in a parameter range, a threshold associated with the parameter range is configured in a protocol-predefined manner, or through a system broadcast message or dedicated signaling (for example, the first device receives configuration information transmitted by the second device, where the configuration information includes a threshold parameter associated with the parameter range). In some embodiments, a predicted value at one instant is obtained based on measured values and/or predicted values at at least K (K is a natural number greater than or equal to 1) instants, and/or a predicted value at one instant is obtained based on measured values and/or predicted values at a maximum of Q (Q is a natural number greater than or equal to 1) instants. In this case, the first device may select a value of K1 as required, provided that K1 is greater than or equal to K, and/or is less than or equal to Q. Herein, at least one of K or Q is the threshold parameter associated with the parameter range. This manner can improve prediction flexibility, and avoid inference limitation caused by a fixed value of K1.

The foregoing describes in detail the content related to the cell-level predicted value, and the following describes, in detail, content related to the beam-level predicted value.

The beam-level predicted value of the first cell at the first instant may be determined based on one or more of the following information: beam-level measured values of the first cell at past K2 instants relative to the first instant; measured values of a part of beams of the first cell and/or predicted values of a part of beams of the first cell at past K2 instants relative to the first instant; or a measured value of a part of beams of the first cell at the first instant, where K2 is a natural number greater than or equal to 1. The first instant is any one of one or more instants associated with the first predicted value.

In some embodiments, the beam-level predicted value at the first instant may be determined based on one or more of the foregoing types of information by using AI inference, for example, AI model inference.

As described above, the first instant may be any one of one or more instants associated with the first predicted value. For brevity, details are not described herein again.

An example in which the first instant is the current instant is used to describe a method for determining the beam-level predicted value (that is, a beam-level predicted value at the current instant) of the first cell at the first instant.

The beam-level predicted value of the first cell at the first instant may be obtained in a plurality of manners.

In some embodiments, the beam-level predicted value of the first cell at the first instant may be determined based on real measurement results at past K2 instants (that is, beam-level measured values of the first cell at the past instants K2). That is, a predicted value of a specific beam of the first cell at the first instant may be determined based on measured values of the beam at the past K2 instants.

If K2 = 3, and beam-level measured values at past three instants respectively include measured values of four beams (identifiers of the beams are 1 to 4), measured values of five beams (identifiers of the beams are 1 to 5), and measured values of six beams (identifiers of the beams are 1 to 6), the beam-level predicted value of the first cell at the first instant may be obtained based on measured values of beams whose identifiers are 1 to 4 at the past three instants. For example, the beam-level predicted value of the first cell at the first instant may include at least predicted values of beams whose identifiers are 1 to 4 at the first instant. For example, a predicted value of a beam whose identifier is 2 at the first instant may be determined based on measured values of the beam whose identifier is 2 in the past three instants. Processing manners of other beams are similar, and details are not described herein again.

In some embodiments, the beam-level predicted value of the first cell at the first instant may be determined based on measured values of a part of beams of the first cell at the past K2 instants and predicted values of a part of beams of the first cell at the past K2 instants. In this implementation, a measurement result of the first cell is predicted, therby reducing energy consumption of the terminal device. In addition, this implementation does not rely on a measured value at the current instant, and has a wider application scope.

If K2 = 3, and a quantity of beams available to the first cell is eight (identifiers of the beams are 1 to 8), beam-level measured values at past three instants respectively include measured values of four beams (identifiers of the beams are 1, 3, 5, and 7), measured values of four beams (identifiers of the beam are 1, 3, 5, and 7), and measured values of four beams (identifiers of the beams are 1, 3, 5, and 7), predicted values of beams whose beam identifiers are 2, 4, 6, and 8 at the past three instants may be first obtained based on measured values of the beams whose identifiers are 1, 3, 5, and 7 at the past three instants. Then, based on measured values or predicted values of each beam at the past three instants, a predicted value of each beam at the first instant is obtained. That is, the beam-level predicted value of the first cell at the first instant is obtained. For example, a predicted value of a beam whose identifier is 1 at the first instant may be obtained based on measured values of the beam at the past three instants. For another example, a predicted value of a beam whose identifier is 4 at the first instant may be obtained based on predicted values of the beam at the past three instants, where the predicted values of the beam at the past three instants may be deduced based on measured values of another beam at the past three instants.

In order to improve accuracy of the beam-level predicted value of the first cell at the first instant, based on the foregoing implementation, a measured value of a part of beams of the first cell at the first instant may be added, to determine the beam-level predicted value of the first cell at the first instant. That is, the beam-level predicted value of the first cell at the first instant may be determined based on measured values of a part of beams of the first cell at the past K2 instants, predicted values of a part of beams of the first cell at the past K2 instants, and a measured value of a part of beams of the first cell at the first instant.

Still, for example, K2 = 3, and a quantity of beams available to the first cell is eight (identifiers of the beams are 1 to 8), where reference signals of only four beams (identifiers of the beams are 1, 3, 5, and 7) are transmitted, that is, only four beams can be actually measured. In this case, beam-level measured values at past three instants respectively include measured values of four beams (identifiers of the beams are 1, 3, 5, and 7), measured values of four beams (identifiers of the beams are 1, 3, 5, and 7), and measured values of four beams (identifiers of the beams are 1, 3, 5, and 7). In an example, predicted values of beams whose identifiers are 2, 4, 6, and 8 at the past three instants may be first obtained based on the measured values of the beams whose identifiers are 1, 3, 5, and 7 at the past three instants. Then, predicted values of the beams whose identifiers are 2, 4, 6, and 8 at the first instant are obtained based on the predicted values of the beams whose identifiers are 2, 4, 6, and 8 at the past three instants. Finally, the beam-level predicted value of the first cell at the first instant may be obtained based on measured values of the beams whose identified are 1, 3, 5, and 7 at the first instant and the predicted values of the beams whose identifiers are 2, 4, 6, and 8 at the first instant.

In some embodiments, the beam-level predicted value of the first cell at the first instant may be determined based on a measured value of a part of beams of the first cell at the first instant.

For example, based on the measured value of a part of beams of the first cell at the first instant, predicted values of the remaining beams of the first cell at the first instant may be inferred, so as to obtain the beam-level predicted value of the first cell at the first instant.

It should be noted that K2 may be a fixed-value parameter or a specific value of a parameter range. If K2 is a fixed-value parameter, K2 may be configured in a protocol-predefined manner, or through a system broadcast message or dedicated signaling (for example, the first device receives configuration information transmitted by the second device, where the configuration information includes the K2 parameter). If K2 is a specific value in a parameter range, a threshold associated with the parameter range is configured in a protocol-predefined manner, or through a system broadcast message or dedicated signaling (for example, the first device receives configuration information transmitted by the second device, where the configuration information includes a threshold parameter associated with the parameter range). In some embodiments, a predicted value at one instant is obtained based on measured values and/or predicted values of at least K (K is a natural number greater than or equal to 1) instants, and/or a predicted value at one instant is obtained based on measured values and/or predicted values at a maximum of Q (Q is a natural number greater than or equal to 1) instants. In this case, the first device may select a value of K2 as required, provided that K2 is greater than or equal to K, and/or less than or equal to Q. Herein, at least one of K or Q is the threshold parameter associated with the parameter range. This manner can improve prediction flexibility, and avoid inference limitation caused by a fixed value of K1.

In some embodiments, the K1 instants or the K2 instants need to meet some conditions to improve accuracy of the first predicted value. For example, the K1 instants or the K2 instants may meet one or more of the following conditions: a time difference between any two adjacent instants is greater than or equal to a first threshold (condition 1); a time difference between any two adjacent instants is less than or equal to a second threshold (condition 2); a time difference between the first instant and a second instant in the K1 instants or the K2 instants is less than or equal to a third threshold (condition 3); a time difference between the first instant and a second instant in the K1 instants or the K2 instants is greater than or equal to a fourth threshold (condition 4); a time difference between the first instant and a third instant in the K1 instants or the K2 instants is less than or equal to a fifth threshold (condition 5); or a time difference between the first instant and a third instant in the K1 instants or the K2 instants is greater than or equal to a sixth threshold (condition 6). The second instant is an instant in the K1 instants or the K2 instants that is farthest from the first instant, and the third instant is an instant in the K1 instants or the K2 instants that is closest to the first instant.

Herein, condition 1 can prevent the K1 instants or the K2 instants from being excessively concentrated; condition 2 can prevent the K1 instants or the K2 instants from being excessively dispersed; and one or more of conditions 3 to 6 can facilitate improving accuracy of a predicted value. The first threshold to the sixth threshold are set, so that time domain distribution of the K1 instants or the K2 instants is adjusted, thereby facilitating improving accuracy of the first predicted value.

It should be noted that, the K1 instants or the K2 instants meeting one or more of the foregoing conditions may include that the K1 instants meet one or more of the foregoing conditions, or the K2 instants meet one or more of the foregoing conditions, or both the K1 instants and the K2 instants meet one or more of the foregoing conditions. If both the K1 instants and the K2 instants meet one or more of the foregoing conditions, a condition met by the K1 instants may be the same as or different from a condition met by the K2 instants. If the K1 instants and the K2 instants meet a same condition, thresholds corresponding to the K1 instants may be the same as or different from thresholds corresponding to the K2 instants in the condition. For example, both the K1 instants and the K2 instants may meet the condition that "a time difference between any two adjacent instants is greater than or equal to a first threshold". For another example, the K1 instants may meet that a time difference between any two adjacent instants is greater than or equal to X, and the K2 instants may meet that a time difference between any two adjacent instants is greater than or equal to Y.

If the first device needs to report predicted values at past K3 instants, that is, the first predicted value includes the predicted values at the past K3 instants, the first device may select the predicted values at the K3 instants from predicted values at a plurality of past instants for reporting. The plurality of past instants mentioned herein may refer to a plurality of past instants relative to a reporting triggering instant. If measurement reporting may be triggered by a first preset event, the plurality of past instants mentioned herein are a plurality of past instants relative to a triggering instant of the first preset event.

In order to improve generalization of information included in the first predicted value, the K3 instants may meet particular conditions. The measurement reporting is triggered, for example, by the first preset event, and the K3 instants may meet one or more of the following conditions: a time difference between any two adjacent instants is greater than or equal to a seventh threshold; a time difference between any two adjacent instants is less than or equal to an eighth threshold; a time difference between a triggering instant of the first preset event and a fourth instant in the K3 instants is less than or equal to a ninth threshold; a time difference between a triggering instant of the first preset event and a fourth instant in the K3 instants is greater than or equal to a tenth threshold; a time difference between a triggering instant of the first preset event and a fifth instant in the K3 instants is less than or equal to an eleventh threshold; or a time difference between a triggering instant of the first preset event and a fifth instant in the K3 instants is greater than or equal to a twelfth threshold. The fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

The seventh threshold to the twelfth threshold are set, so that time domain distribution of the K3 instants is adjusted, and a curve of a first predicted value within a period of time can be more accurately fitted based on the predicted values at the K3 instants, thereby facilitating improving accuracy of determining a mobility trend, and improving accuracy of cell handover decision. In a case that the first predicted value includes a beam-level predicted value, the foregoing thresholds are set, thereby not only facilitating improving accuracy of cell handover decision, but also improving rationality of beam-based non-contention random access resource configuration.

If the first device needs to report predicted values at future K4 instants, that is, the first predicted value includes the predicted values at the future K4 instants, the first device may select the predicted values at the K4 instants from predicted values at a plurality of future instants for reporting. The plurality of future instants mentioned herein may refer to a plurality of future instants relative to a reporting triggering instant. If measurement reporting may be triggered by a first preset event, the plurality of future instants mentioned herein are a plurality of future instants relative to a triggering instant of the first preset event.

In order to improve generalization of information included in the first predicted value, the K4 instants may meet particular conditions. The measurement reporting is triggered, for example, by the first preset event, and the K4 instants may meet one or more of the following conditions: a time difference between any two adjacent instants is greater than or equal to a thirteenth threshold; a time difference between any two adjacent instants is less than or equal to a fourteenth threshold; a time difference between the triggering instant of the first preset event and a sixth instant in the K4 instants is less than or equal to a fifteenth threshold; a time difference between the triggering instant of the first preset event and a sixth instant in the K4 instants is greater than or equal to a sixteenth threshold; a time difference between the triggering instant of the first preset event and a seventh instant in the K4 instants is less than or equal to a seventeenth threshold; or a time difference between the triggering instant of the first preset event and a seventh instant in the K4 instants is greater than or equal to an eighteenth threshold. The sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

The thirteenth threshold to the eighteenth threshold are set, so that time domain distribution of the K4 instants is adjusted, and a curve of a first predicted value within a period of time can be more accurately fitted based on the predicted values at the K4 instants, thereby facilitating improving accuracy of determining a mobility trend, and improving accuracy of cell handover decision.

It should be noted that K3 or K4 may be a fixed-value parameter or a specific value of a parameter range. If K3 or K4 is a fixed-value parameter, K3 or K4 may be configured in a protocol-predefined manner, or through a system broadcast message or dedicated signaling (for example, the first device receives configuration information transmitted by the second device, where the configuration information includes the K3 or K4 parameter). If K3 or K4 is a specific value in a parameter range, a threshold associated with the parameter range is configured in a protocol-predefined manner, or through a system broadcast message or dedicated signaling (for example, the first device receives configuration information transmitted by the second device, where the configuration information includes a threshold parameter associated with the parameter range). In some embodiments, the first device needs to report measured values and/or predicted values of at least K (K is a natural number greater than or equal to 1) instants, and/or the first device needs to report measured values and/or predicted values at a maximum of Q (Q is a natural number greater than or equal to 1) instants. In this case, the first device may select a value of K3 or K4 as required, provided that at least one of K3 or K4 is greater than or equal to K and/or less than or equal to Q (including a scenario in which K3 is greater than or equal to K, and/or less than or equal to Q, a scenario in which K4 is greater than or equal to K, and/or less than or equal to Q, and a scenario in which a sum of K3 and K4 is greater than or equal to K, and/or less than or equal to Q). Herein, at least one of K or Q is the threshold parameter associated with the parameter range. This manner can improve flexibility of reporting a prediction result, and avoid a problem of a measurement result reporting delay caused by a fixed value of K3 or K4. Certainly, if at least one of a measurement result or a prediction result at the current instant (the triggering instant of the first preset event) also needs to be reported, the current instant may be or may not be subject to the foregoing instant quantity constraint (for example, a scenario in which K3 is greater than or equal to K-1, and/or less than or equal to Q-1), which is not limited in this application.

As mentioned above, the measurement reporting (or may be referred to as a cell handover decision assistance process) may be triggered by the first preset event, or the cell handover decision assistance process may be triggered by the first preset event. Therefore, the first predicted value may be associated with a triggering instant of the first preset event. If the first predicted value includes a predicted value at the current instant, the predicted value at the current instant may refer to a predicted value at the triggering instant of the first preset event. If the first predicted value includes a predicted value at one or more past instants, the predicted value at the past one or more past instants may be a predicted value at one or more past instants relative to a triggering instant of the first preset event. If the first predicted value includes a predicted value at one or more future instants, the predicted value at the one or more future instants may be a predicted value at one or more future instants relative to a triggering instant of the first preset event.

The first preset event may be associated with a plurality of factors, such as signal quality of the serving cell, signal quality of the neighboring cell, a location of the first device, a relative time, and an absolute time. In some cases, measurement reporting may be performed periodically. Therefore, the first preset event may be associated with a status of a periodic measurement reporting timer.

The first preset event may include a first-type preset event. In some embodiments, the first-type preset event includes one or more of the following events: a measured value of the serving cell is greater than or equal to a nineteenth threshold (which may be referred to as event A1); a measured value of the serving cell is less than or equal to a twentieth threshold (which may be referred to as event A2); a difference between a measured value of the neighboring cell and a measured value of a primary cell PCell or a primary secondary cell PSCell is greater than or equal to a first offset (which may be referred to as event A3); a measured value of the neighboring cell is greater than or equal to a twenty-first threshold (which may be referred to as event A4); a measured value of a primary cell or a primary secondary cell is less than a twenty-second threshold, and a measured value of the neighboring cell or a secondary cell is greater than a twenty-third threshold (which may be referred to as event A5); a difference between a measured value of the neighboring cell and a measured value of a secondary cell SCell is greater than or equal to a second offset (which may be referred to as event A6); a distance between the first device and a first reference point is greater than or equal to a twenty-fourth threshold (which may be referred to as event A8); a distance between the first device and a second reference point is less than or equal to a twenty-fifth threshold (which may be referred to as event A9); a measured value of the neighboring cell is greater than or equal to a twenty-sixth threshold, and the neighboring cell and the serving cell are based on different radio access technologies (that is, the neighboring cell and the serving cell are inter-frequency or inter-RAT cells) (which may be referred to as event A10); a measured value of a primary cell PCell is less than a twenty-seventh threshold, and a measured value of the neighboring cell is greater than a twenty-eighth threshold, where the neighboring cell and the serving cell are based on different radio access technologies (which may be referred to as event A11); a periodic measurement reporting timer expires (which may be referred to as event A12); a first absolute time instant is reached (which may be referred to as event A13); or a first time period has elapsed since successful reception of a measurement configuration (which may be referred to as event A14).

It should be noted that any of the foregoing first-type preset events may be used in combination with a trigger time (time to trigger, TTT) (that is, a TTT constraint behavior is considered for predicting a measurement result) or used independently from the TTT (that is, a TTT constraint behavior is not considered for predicting a measurement result).

The measured value mentioned herein may be a signal measurement result. For example, the measured value of the serving cell may be a signal measurement result of the serving cell.

Generally, when the measured value of the serving cell, for example, a signal quality measurement result is poor, a measurement reporting process may be triggered. For example, the first-type preset event may include event A2.

Whether to perform cell handover is not only related to the measured value of the serving cell, but also to the measured value of the neighboring cell. For example, whether to trigger a cell handover decision process is determined only when the measured value of the neighboring cell is higher than the measured value of the serving cell. In an example, when the difference between the measured value of the neighboring cell and the measured value of the primary cell or the primary secondary cell is greater than or equal to an offset, it is determined whether to perform cell handover. For example, the first type of preset event may include event A3. In another example, the first-type preset event may include event A6. For another example, when the measured value of the serving cell is low and the measured value of the neighboring cell is high, a cell handover decision process may be triggered. In an example, when the measured value of the serving cell (the measured value of the primary cell or the primary secondary cell) is less than the twenty-second threshold, and the measured value of the neighboring cell or the secondary cell is greater than the twenty-third threshold, a cell handover decision process may be triggered, that is, the first-type preset event may include event A5. In another example, the first-type preset event may include event A11.

For ease of implementation, when the signal quality of the neighboring cell is good, a cell handover decision may be triggered. For example, when the measured value of the neighboring cell is greater than or equal to the twenty-first threshold, a cell handover decision process may be triggered. That is, the first-type preset event may include event A4.

When the signal quality of the serving cell is excessively poor, it may be impossible to complete a measurement and cell handover decision process. Therefore, the first-type preset event may include that the measured value of the serving cell is greater than or equal to the nineteenth threshold, that is, event A1.

Changes in distances between the terminal device and some reference points may reflect a movement characteristic of the terminal device. Therefore, a cell handover decision process may be triggered based on a distance relationship between the terminal device and some reference points. For example, if the distance between the terminal device and the first reference point is greater than or equal to the twenty-fourth threshold, or the distance between the terminal device and the second reference point is less than or equal to the twenty-fifth threshold, a cell handover decision process may be triggered. For another example, when the distance between the terminal device and the first reference point is greater than or equal to the twenty-fourth threshold, and the distance between the terminal device and the second reference point is less than or equal to the twenty-fifth threshold (which may be referred to as event A7), a cell handover decision process may be triggered. That is, the first-type preset event may include one or more of event A7, event A8, or event A9. The first reference point may be, for example, a cell center location, and the second reference point may be, for example, a location on a cell edge.

In some embodiments, measurement reporting may be performed periodically, to improve system reliability. The periodic measurement reporting may be controlled by using a timer, or may be controlled by setting an absolute time instant for reporting, or may be controlled by setting a relative time instant for reporting. For example, measurement reporting may be performed when a timer associated with the periodic measurement reporting expires. For another example, when the first absolute time instant is reached, measurement reporting may be performed. For another example, the relative time for measurement reporting may be a relative time based on an instant at which the measurement configuration is successfully received. In an example, in a case that a first time period has elapsed since successful reception of the measurement configuration, measurement reporting may be performed. Based on this, the first-type preset event may include one or more of event A12, event A13, or event A14.

Triggering a measurement reporting process by using the first-type preset event facilitates making a cell handover decision in time.

In some embodiments, the first preset event may further include a second-type preset event. For example, the second-type preset event may include that the first-type preset event is predicted to occur within a second time period. Some parameters in a future period of time, such as a parameter associated with cell signal quality, may be predicted by using the second-type preset event, to report a measurement result in advance, thereby facilitating determining mobility of the terminal device and performing cell handover decision in advance, and reducing a probability of a cell handover failure or a radio link failure.

For example, the second-type preset event may include one or more of the following events: the measured value of the serving cell being greater than or equal to the nineteenth threshold is predicted to occur within t1; the measured value of the serving cell being less than or equal to the twentieth threshold is predicted to occur within t2; the difference between the measured value of the neighboring cell and the measured value of the primary cell PCell or the primary secondary cell PSCell being greater than or equal to the first offset is predicted to occur within t3; the measured value of the neighboring cell being greater than or equal to the twenty-first threshold is predicted to occur within t4; the measured value of the primary cell or the primary secondary cell being less than the twenty-second threshold and the measured value of the neighboring cell or the secondary cell being greater than the twenty-third threshold is predicted to occur within t5; the difference between the measured value of the neighboring cell and the measured value of the secondary cell SCell being greater than or equal to the second offset is predicted to occur within t6; the distance between the first device and the first reference point being greater than or equal to the twenty-fourth threshold is predicted to occur within t7; the distance between the first device and the second reference point being less than or equal to the twenty-fifth threshold is predicted to occur within t8; the measured value of the neighboring cell being greater than or equal to the twenty-sixth threshold and the neighboring cell and the serving cell being based on different radio access technologies (that is, the neighboring cell and the serving cell are inter-frequency or inter-RAT cells) is predicted to occur within t9; the measured value of the primary cell PCell being less than the twenty-seventh threshold and the measured value of the neighboring cell being greater than the twenty-eighth threshold is predicted to occur within t10, where the neighboring cell and the serving cell are based on different wireless access technologies; the periodic measurement reporting timer is predicted to expire within t11; the first absolute time instant is predicted to arrive within t12; or the first time period having elapsed since successful reception of the measurement configuration is predicted to occur within t13.

Values of the second time (that is, t1 to t13) corresponding to different events in the second-type preset events may be the same or different.

It should be noted that any of the foregoing second-type preset events may be used in combination with a TTT (that is, a TTT constraint behavior is considered for predicting a measurement result) or used independently from the TTT (that is, a TTT constraint behavior is not considered for predicting a measurement result).

In some embodiments, the first preset event may further include a third-type preset event, and for example, the third-type preset event may include that the first-type preset event is predicted to occur within the second time period and the measured value of the serving cell is less than or equal to a twenty-ninth threshold. The third-type preset event may be used to avoid triggering measurement reporting when signal quality of the serving cell is relatively good, thereby facilitating reducing energy consumption of the terminal device.

For example, the third-type preset event may include one or more of the following events: the measured value of the serving cell being greater than or equal to the nineteenth threshold is predicted to occur within t1, and the measured value of the serving cell is less than or equal to the twenty-ninth threshold; the measured value of the serving cell being less than or equal to the twentieth threshold is predicted to occur within t2, and the measured value of the serving cell is less than or equal to the twenty-ninth threshold; the difference between the measured value of the neighboring cell and the measured value of the primary cell PCell or the primary secondary cell PSCell being greater than or equal to the first offset is predicted to occur within t3, and the measured value of the serving cell is less than or equal to the twenty-ninth threshold; the measured value of the neighboring cell being greater than or equal to the twenty-first threshold is predicted to occur within t4, and the measured value of the serving cell is less than or equal to the twenty-ninth threshold; the measured value of the primary cell or the primary secondary cell is less than the twenty-second threshold and the measured value of the neighboring cell or the secondary cell being greater than the twenty-third threshold is predicted to occur within t5, and the measured value of the serving cell is less than or equal to the twenty-ninth threshold; the difference between the measured value of the neighboring cell and the measured value of the secondary cell SCell being greater than or equal to the second offset is predicted to occur within t6, and the measured value of the serving cell is less than or equal to the twenty-ninth threshold; the distance between the first device and the first reference point being greater than or equal to the twenty-fourth threshold is predicted to occur within t7, and the measured value of the serving cell is less than or equal to the twenty-ninth threshold; the distance between the first device and the second reference point being less than or equal to the twenty-fifth threshold is predicted to occur within t8, and the measured value of the serving cell is less than or equal to the twenty-ninth threshold; the measured value of the neighboring cell being greater than or equal to the twenty-sixth threshold and the neighboring cell and the serving cell being based on different radio access technologies (that is, the neighboring cell and the serving cell are inter-frequency or inter-RAT cells) is predicted to occur within t9, and the measured value of the serving cell is less than or equal to the twenty-ninth threshold; the measured value of the primary cell PCell being less than the twenty-seventh threshold and the measured value of the neighboring cell being greater than the twenty-eighth threshold is predicted to occur within t10, and the measured value of the serving cell is less than or equal to the twenty-ninth threshold, where the neighboring cell and the serving cell are based on different wireless access technologies; the periodic measurement reporting timer is predicted to expire within t11, and the measured value of the serving cell is less than or equal to the twenty-ninth threshold; the first absolute time instant is predicted to arrive within t12, and the measured value of the serving cell is less than or equal to the twenty-ninth threshold; or the first time period having elapsed since successful reception of the measurement configuration is predicted to occur within t13, and the measured value of the serving cell is less than or equal to the twenty-ninth threshold.

Values of the second time (that is, t1 to t13) corresponding to different events in the third-type preset events may be the same or different, and values of the twenty-ninth threshold corresponding to different events may be the same or different.

It should be noted that any of the foregoing third-type preset events may be used in combination with a TTT (that is, a TTT constraint behavior is considered for predicting a measurement result) or used independently from the TTT (that is, a TTT constraint behavior is not considered for predicting a measurement result).

In some embodiments, the first preset event may further include a fourth-type preset event. For example, the fourth-type preset event may include that the first-type preset event is predicted to occur within the second time period and the measured value of the serving cell is less than or equal to a thirtieth threshold and lasts for a third time period. According to the fourth-type preset event, triggering measurement reporting when signal quality of the serving cell is relatively good can be avoided, and triggering measurement reporting due to a measured value of a signal of the serving cell being occasionally lower than a threshold can also be avoided, thereby facilitating improving stability of a measurement reporting mechanism.

For example, the fourth-type preset event may include one or more of the following events: the measured value of the serving cell being greater than or equal to the nineteenth threshold is predicted to occur within t1, and the measured value of the serving cell is less than or equal to the thirtieth threshold and lasts for W (W is a time threshold); the measured value of the serving cell being less than or equal to the twentieth threshold is predicted to occur within t2, and the measured value of the serving cell is less than or equal to the thirtieth threshold and lasts for W; that the difference between the measured value of the neighboring cell and the measured value of the primary cell PCell or the primary secondary cell PSCell being greater than or equal to the first offset is predicted to occur within t3, and the measured value of the serving cell is less than or equal to the thirtieth threshold and lasts for W; the measured value of the neighboring cell being greater than or equal to the twenty-first threshold is predicted to occur within t4, and the measured value of the serving cell is less than or equal to the thirtieth threshold and lasts for W; the measured value of the primary cell or the primary secondary cell being less than the twenty-second threshold and the measured value of the neighboring cell or the secondary cell being greater than the twenty-third threshold is predicted to occur within t5, and the measured value of the serving cell is less than or equal to the thirtieth threshold and lasts for W; the difference between the measured value of the neighboring cell and the measured value of the secondary cell SCell being greater than or equal to the second offset is predicted to occur within t6, and the measured value of the serving cell is less than or equal to the thirtieth threshold and lasts for W; the distance between the first device and the first reference point being greater than or equal to the twenty-fourth threshold is predicted to occur within t7, and the measured value of the serving cell is less than or equal to the thirtieth threshold and lasts for W; the distance between the first device and the second reference point being less than or equal to the twenty-fifth threshold is predicted to occur within t8, and the measured value of the serving cell is less than or equal to the thirtieth threshold and lasts for W; the measured value of the neighboring cell being greater than or equal to the twenty-sixth threshold and the neighboring cell and the serving cell are based on different radio access technologies (that is, the neighboring cell and the serving cell are inter-frequency or inter-RAT cells) is predicted to occur within t9, and the measured value of the serving cell is less than or equal to the thirtieth threshold and lasts for W; the measured value of the primary cell PCell being less than the twenty-seventh threshold and the measured value of the neighboring cell being greater than the twenty-eighth threshold is predicted to occur within t10, and the measured value of the serving cell is less than or equal to the thirtieth threshold and lasts for W, where the neighboring cell and the serving cell are based on different wireless access technologies; the periodic measurement reporting timer is predicted to expire within t11, and the measured value of the serving cell is less than or equal to the thirtieth threshold and lasts for W; the first absolute time instant is predicted to arrive within t12, and the measured value of the serving cell is less than or equal to the thirtieth threshold and lasts for W; or the first time period having elapsed since successful reception of the measurement configuration is predicted to occur within t13, and the measured value of the serving cell is less than or equal to the thirtieth threshold and lasts for W.

Values of the second time (that is, t1 to t13) corresponding to different events in the fourth-type preset events may be the same or different, values of the thirtieth threshold corresponding to different events may be the same or different, and values of W (that is, the third time) corresponding to different events may be the same or different.

It should be noted that any of the foregoing fourth-type preset events may be used in combination with a TTT (that is, a TTT constraint behavior is considered for predicting a measurement result) or used independently from the TTT (that is, a TTT constraint behavior is not considered for predicting a measurement result).

A value of the thirtieth threshold may be the same as that of the twenty-ninth threshold mentioned above, or may be different from that of the twenty-ninth threshold. For example, the thirtieth threshold may be greater than or equal to the twenty-ninth threshold.

The second time may include one or more of t1 to t13 mentioned above. Values of t1 to t13 may be the same or different depending on a use scenario or a use requirement, which is not limited in this application.

Any one of the foregoing first preset events may be used in measurement processes related to conventional handover, conditional handover, and layer 1/layer 2 triggered mobility (L1/L2-triggered mobility, LTM) handover or dual-active protocol stack (dual active protocol stack, DAPS) handover, and the like.

The foregoing plurality of parameters associated with the first predicted value, such as K1, K2, K3, K4, K, Q, the first threshold to the thirtieth threshold, the first time, the second time, the first offset, the second offset, the first reference point, the second reference point, the first absolute time instant, the periodic measurement reporting timer, the time threshold W (that is, the third time), and the like may be configured in one or more of the following manners: a protocol-predefined manner, or a system broadcast message configuration manner, or a dedicated signaling configuration manner.

A configuration granularity of the parameter associated with the first predicted value may include one or more of the following: a frequency range (frequency range, FR) granularity, a carrier granularity, a band granularity, a band combination granularity, a device type granularity, a cell granularity, or the like.

A value of K1 associated with the first predicted value is used as an example, to describe different configuration granularities. For example, when the configuration granularity is a frequency range granularity, the value of K1 may be separately defined based on FR1, FR2-1, or FR2-2. For another example, when the configuration granularity is a carrier granularity range, the value of K1 may be separately defined based on different component carriers (component carrier, CC) or carrier combinations. For another example, when the configuration granularity is a band granularity, the value of K1 may be separately defined based on different frequency bands. When the configuration granularity is a band combination granularity, the value of K1 may be separately defined based on different frequency band combinations. For another example, when the configuration granularity is a device type granularity, the value of K1 may be separately defined based on different terminal device types, terminal device type combinations, network device types, or network device type combinations. For another example, when the configuration granularity is a cell granularity, the value of K1 may be separately defined based on different cells or different cell combinations, where the cell may be identified by using a {frequency, PCI} combination, an index, or a cell global identity (cell global identity, CGI).

Different configuration granularities may be selected for each parameter based on specific scenarios to improve measurement result prediction performance in different scenarios. Configuration granularities of the plurality of parameters associated with the first predicted value may be the same or may be different, which is not limited in this application.

In some embodiments, the first information may be further used to indicate a measured value of the first cell, so as to improve accuracy of a cell handover decision result. For example, the measured value of the first cell may include a cell-level measured value and/or a beam-level measured value. For another example, the measured value of the first cell may include one or more of a measured value at the current instant and a measured value at one or more past instants.

When the first information includes both a measured value of the first cell and a predicted value of the first cell, the first predicted value and the measured value of the first cell need to be distinguished. For example, different information fields of the first information may be used to respectively indicate the measured value of the first cell and the first predicted value of the first cell. For another example, different values of indication information may be used to indicate the measured value of the first cell and the first predicted value of the first cell. In an example, when a value of indication information is "1", it may indicate that an associated measurement result is the predicted value of the first cell; or when a value of indication information is "0", it may indicate that an associated measurement result is the measured value of the first cell. Alternatively, when a value of indication information is "0", it may indicate that an associated measurement result is the predicted value of the first cell; or when a value of indication information is "1", it may indicate that an associated measurement result is the measured value of the first cell.

In some embodiments, physical layer filtering (that is, L1 filtering) and/or higher layer filtering (for example, L3 filtering) may be performed on the first predicted value, thereby facilitaitng improving accuracy of the measured value of the first cell.

In some embodiments, a measured value and/or a predicted value at any instant included in the first information may be associated with absolute time information and/or relative time information, for example, associated with absolute timestamp information and/or relative timestamp information.

The absolute timestamp information may be represented by using Universal Time Coordinated (universal time coordinated, UTC) (which may also be referred to as Coordinated Universal Time) or system time information. The system time information may include one or more of a system hyper frame number, a system frame number, a system subframe number, a system slot number, or a symbol number.

The relative timestamp information may be time interval information relative to a triggering instant (denoted as T1) of the first preset event or time interval information relative to a reference instant (denoted as T2). The reference instant may be a default instant, and the reference instant may alternatively be indicated by using the first information. For example, if an instant corresponding to the cell-level measured value of the first cell is T1-2, it indicates that T1 is used as a time reference, and a value of the relative timestamp information is 2. For another example, an instant corresponding to the cell-level measured value of the first cell is T1-2. In this case, when T2 is used as a time reference (assuming that T2-T1 is equal to 3), a value of the relative timestamp information is 5.

Content associated with reporting of the first predicted value is described above, and configuration information associated with the first predicted value is described below.

In some embodiments, the method shown in FIG. 4 further includes step S420.

Step S420: the first device receives second information transmitted by the second device. Alternatively, the second device transmits the second information to the first device. The second information may be used to indicate the configuration information associated with the first predicted value.

In some embodiments, the second information may include one or more of the following information: first indication information; one or more pieces of physical cell identity (physical cell identifier, PCI) information supporting or allowing obtaining of the first predicted value; beam information supporting or allowing obtaining of a measured value; beam information supporting or allowing obtaining of a predicted value; second indication information; or the configuration information of the first preset event.

The following separately describes the foregoing information that may be included in the second information.

### First indication information

The first indication information may be used to indicate whether to support or allow obtaining of the first predicted value. For example, first indication information may be associated with one or more of the following information (this association relationship may be referred to as a first association relationship): frequency information; PCI information; measurement object MO information; measurement identifier information; measurement reporting configuration information; or the foregoing configuration information of the first preset event.

As described above, the first predicted value may include a cell-level predicted value and/or a beam-level predicted value. The first indication information may be used to indicate whether to support or allow obtaining of the cell-level predicted value and/or the beam-level predicted value. For example, the first indication information may separately indicate, by using different information fields, whether to support or allow obtaining of the cell-level predicted value and/or the beam-level predicted value. That is, the first indication information may separately indicate whetherto support or allow obtaining of the cell-level predicted value, and separately indicate whether to support or allow obtaining of the beam-level predicted value. For another example, the first indication information may indicate, by using one information field, whether to support or allow obtaining of both the cell-level predicted value and the beam-level predicted value. That is, the first indication information may indicate that obtaining of the cell-level predicted value and the beam-level predicted value is supported or allowed, or indicate that obtaining of the cell-level predicted value and the beam-level predicted value is not supported or allowed.

The following describes cases in which the first indication information is associated with different information by using an example in which the first indication information indicates, by using different information fields, whether to support or allow obtaining of the cell-level predicted value and/or the beam-level predicted value.

If the first indication information is associated with frequency information, a first information field included in the first indication information indicates to allow obtaining of a cell-level predicted value of an associated frequency, and a second information field included in the first indication information indicates not to allow obtaining of a beam-level predicted value of the associated frequency, the first device may perform cell-level prediction for the associated frequency (for example, inferring a cell-level predicted value at the current instant based on a beam measurement result measured in a past period of time), but the first device is not allowed to perform beam-level prediction for the associated frequency (for example, not allowed to infer, based on a measured value of a part of beams, predicted values of the remaining beams).

If the first indication information is associated with PCI information, a first information field included in the first indication information indicates to allow obtaining of a cell-level predicted value of an associated PCI or cell, and a second information field included in the first indication information indicates not to allow obtaining of a beam-level predicted value of the associated PCI or cell, the first device may perform cell-level prediction for the associated PCI or cell (for example, inferring a cell-level predicted value at the current instant based on a beam measurement result measured in a past period of time), but the first device is not allowed to perform beam-level prediction for the associated PCI or cell (for example, not allowed to infer, based on a measured value of a part of beams, predicted values of the remaining beams).

If the first indication information is associated with measurement identifier information, a first information field included in the first indication information indicates to allow obtaining of a cell-level predicted value of a frequency associated with a measurement identifier, and a second information field included in the first indication information indicates not to allow obtaining of a beam-level predicted value of the frequency associated with the measurement identifier, the first device may perform cell-level prediction for the frequency associated with the measurement identifier (for example, inferring a cell-level predicted value at the current instant based on a beam measurement result measured in a past period of time), but the first device is not allowed to perform beam-level prediction for the frequency associated with the measurement identifier (for example, not allowed to infer, based on a measured value of a part of beams, predicted values of the remaining beams).

If the first indication information is associated with measurement reporting configuration information, a first information field included in the first indication information indicates to allow obtaining of a cell-level predicted value of a frequency associated with a measurement reporting configuration, and a second information field included in the first indication information indicates not to allow obtaining of a beam-level predicted value of the frequency associated with the measurement reporting configuration, the first device may perform cell-level prediction for the frequency associated with the measurement reporting configuration (for example, inferring a cell-level predicted value at the current instant based on a beam measurement result measured in a past period of time), but the first device is not allowed to perform beam-level prediction for the frequency associated with the measurement reporting configuration (for example, not allowed to infer, based on a measured value of a part of beams, predicted values of the remaining beams).

If the first indication information is associated with configuration information of the first preset event, a first information field included in the first indication information indicates to allow obtaining of a cell-level predicted value of a frequency associated with a configuration of the first preset event, and a second information field included in the first indication information indicates not to allow obtaining of a beam-level predicted value of the frequency associated with the configuration of the first preset event, the first device may perform cell-level prediction for the frequency associated with configuration of the first preset event (for example, inferring a cell-level predicted value at the current instant based on a beam measurement result measured in a past period of time), but the first device is not allowed to perform beam-level prediction for the frequency associated with configuration of the first preset event (for example, not allowed to infer, based on a measured value of a part of beams, predicted values of the remaining beams).

The first association relationship may be a one-to-one association relationship, or may be a one-to-many association relationship.

For example, when the first indication information is associated with frequency information, the first association relationship being a one-to-one association relationship may indicate that one piece of first indication information is associated with one piece of frequency information, or the first association relationship being a one-to-many association relationship may indicate that one piece of first indication information is associated with one set of pieces of frequency information. In this case, the first indication information may be used to indicate whether one frequency or one set of frequencies associated support or allow obtaining of the cell-level predicted value and/or the beam-level predicted value.

For another example, when the first indication information is associated with PCI information, the first association relationship being a one-to-one association relationship may indicate one piece of first indication information is associated with one piece of PCI information, or the first association relationship being a one-to-many association relationship may indicate that one piece of first indication information is associated with one set of pieces of PCI information. In this case, the first indication information may be used to indicate whether one PCI or one set of PCIs (or one cell or one set of cells) associated support or allow obtaining of the cell-level predicted value and/or the beam-level predicted value.

For another example, when the first indication information is associated with measurement object information, the first association relationship being a one-to-one association relationship may indicate that one piece of first indication information is associated with one piece of measurement object information, or the first association relationship being a one-to-many association relationship may indicate that or one piece of first indication information is associated with one set of pieces of measurement object information. In this case, the first indication information may be used to indicate whether one measurement object or one set of measurement objects associated support or allow obtaining of the cell-level predicted value and/or the beam-level predicted value.

One measurement object configuration may include frequency information that needs to be measured. In some other embodiments, one measurement object configuration may further include one or more pieces of PCI information associated with a frequency that needs to be measured.

For another example, when the first indication information is associated with measurement identifier information, the first association relationship being a one-to-one association relationship may indicate that one piece of first indication information is associated with one piece of measurement identifier information, or the first association relationship being a one-to-many association relationship may indicate that or one piece of first indication information is associated with one set of pieces of measurement identifier information. In this case, the first indication information may be used to indicate whether one measurement identifier or one set of measurement identifiers associated support or allow obtaining of the cell-level predicted value and/or the beam-level predicted value. One piece of measurement identifier information may be associated with one piece of measurement object configuration information and one piece of measurement reporting configuration information.

For another example, when the first indication information is associated with measurement reporting configuration information, the first association relationship being a one-to-one association relationship may indicate that one piece of first indication information is associated with one piece of measurement reporting configuration information, or the first association relationship being a one-to-many association relationship may indicate that one piece of first indication information is associated with one set of pieces of measurement reporting configuration information. In this case, the first indication information may be used to indicate whether one measurement reporting configuration or one set of measurement reporting configurations associated support or allow obtaining of the cell-level predicted value and/or the beam-level predicted value. One piece of measurement reporting configuration information may include at least configuration information of the first preset event.

For another example, when the first indication information is associated with configuration information of the first preset event, the first association relationship being a one-to-one association relationship may indicate that one piece of first indication information is associated with one piece of configuration information of the first preset event, or the first association relationship being a one-to-many association relationship may indicate that one piece of first indication information is associated with one set of pieces of configuration information of the first preset events. In this case, the first indication information may be used to indicate whether one configuration or one set of configurations of the first preset event associated support or allow obtaining of the cell-level predicted value and/or the beam-level predicted value.

In some embodiments, a first indication information field is defined only in measurement object information or is defined only in measurement reporting configuration information, that is, a first indication information parameter is not defined in both these two types of configuration information.

In some other embodiments, a first indication information parameter is defined in both measurement object information and measurement reporting configuration information. One piece of measurement object information or one piece of measurement reporting configuration information may be associated with different measurement identifier information. Different measurement policies can be configured for different measurement identifiers by using different configuration manners of first indication information associated with the measurement object information and first indication information associated with the measurement reporting information, so as to improve measurement flexibility.

For example, if either the first indication information associated with the measurement object information or the first indication information associated with the measurement reporting information is set to be disabled, at least one of cell-level prediction or beam-level prediction on a corresponding frequency or cell is not allowed.

In an example, if first indication information included in a measurement object is set to be allowed, and first indication information included in a measurement reporting configuration associated with the measurement object is set to be disabled, at least one of cell-level prediction or beam-level prediction on a corresponding frequency or cell is not allowed.

In an example, if first indication information included in a measurement object is set to be disabled but first indication information included in a measurement reporting configuration associated with the measurement object is set to be disabled, at least one of cell-level prediction or beam-level prediction on a corresponding frequency or cell is not allowed.

In an example, if first indication information included in a measurement object is not configured (that is, the parameter does not appear) but first indication information included in a measurement reporting configuration associated with the measurement object is set to be disabled, at least one of cell-level prediction or beam-level prediction on a corresponding frequency or cell is not allowed.

In an example, if first indication information included in a measurement object is set to be disabled, and first indication information included in a measurement reporting configuration associated with the measurement object is not configured, at least one of cell-level prediction or beam-level prediction on a corresponding frequency or cell is not allowed.

For another example, if either the first indication information associated with the measurement object information or the first indication information associated with the measurement report information is not configured, whether to allow performing cell-level prediction and/or beam-level prediction on a corresponding frequency or cell is determined based on the other first indication information.

In an example, if first indication information included in a measurement object is not configured but first indication information included in a measurement reporting configuration associated with the measurement object is set to be disabled, at least one of cell-level prediction or beam-level prediction on a corresponding frequency or cell is allowed.

In an example, if first indication information included in a measurement object is set to be allowed, and first indication information included in a measurement reporting configuration associated with the measurement object is not configured, at least one of cell-level prediction or beam-level prediction on a corresponding frequency or cell is allowed.

For another example, if both the first indication information associated with the measurement object information and the first indication information associated with the measurement reporting information are set to be diabled or are not configured, at least one of cell-level prediction or beam-level prediction on a corresponding frequency or cell is not allowed.

For another example, if both the first indication information associated with the measurement object information and the first indication information associated with the measurement reporting information are set to be allowed, at least one of cell-level prediction and/or beam-level prediction on a corresponding frequency or cell is allowed.

### PCI information

As mentioned above, the first indication information may be associated with the PCI information, to indicate whether a cell associated with the PCI information supports obtaining of the first predicted value. That is, the PCI information associated with the first indication information needs to be used together with the first indication information, so as to determine whether the cell associated with the PCI information supports obtaining of the first predicted value.

For ease of implementation, the second information may include one or more pieces of PCI information that support or allow obtaining of the first predicted value, to indicate that a cell associated with the one or more PCIs supports or allows obtaining of the first predicted value, where the PCI information is usually configured based on a frequency granularity.

### Beam information

In some embodiments, the second information may include beam information supporting or allowing obtaining of a measured value, and/or include beam information supporting or allowing obtaining of a predicted value. The beam information may include beam identifier information or beam pattern information. The beam information is usually configured based on a frequency granularity or a cell granularity (for example, a cell is identified by a frequency and PCI information).

The beam pattern information may be used to indicate which beams can be actually measured. For example, the beam pattern information may be a bit string. The bit string may include a plurality of bits, and each bit may be used to indicate whether one beam or one set of beams can be actually measured. In an example, whether one beam or one set of beams can be actually measured may be indicated by using different values of a bit. For example, a value "0" may indicate that a corresponding beam or beam set cannot be actually measured, and a value "1" may indicate that a corresponding beam or beam set can be actually measured. Certainly, the meaning of the values may be reversed, which is not limited in this application.

The beam pattern information may be used to indicate which beams need to be predicted. For example, the beam pattern information may be a bit string. The bit string may include a plurality of bits, and each bit may be used to indicate whether one beam or one set of beams need to be predicted. In an example, whether one beam or one set of beams need to be predicted may be indicated by using different values of a bit. For example, a value "0" may indicate that a corresponding beam or beam set does not need to be predicted, and a value "1" may indicate that a corresponding beam or beam set needs to be predicted. Certainly, the meaning of the values may be reversed, which is not limited in this application.

The beam information supporting or allowing obtaining of a measured value and the beam information supporting or allowing obtaining of a predicted value may be used together or perform joint indication. For example, the beam pattern information, such as a bit string, may indicate which beams can be actually measured and which beams need to be predicted. The bit string may include a plurality of bits, and each bit may be used to indicate whether one beam or one set of beams can be actually measured and whether one beam or one set of beams need to be predicted. In an example, whether one beam or one set of beams can be actually measured and whether one beam or one set of beams need to be predicted may be indicated by using different values of a bit. For example, a value "0" may indicate that a corresponding beam or beam set needs to be predicted, and a value "1" may indicate that a corresponding beam or beam set can be actually measured. Certainly, the meaning of the values may be reversed, which is not limited in this application.

The joint indication of the beam information supporting or allowing obtaining of a measured value and the beam information supporting or allowing obtaining of a predicted value, facilitating obtaining results of all beams of the first cell by the first device. The results of all beams mentioned herein may include measured values of beams and/or predicted values of beams.

It should be noted that an indication rule for the beam pattern information may be predefined. Content of the rule is not limited in this application.

Beam measurement or beam prediction is performed based on the foregoing beam pattern information, thereby facilitating avoiding energy consumption waste caused by scanning all beams to obtain measured values of beams, or alleviating a prediction error problem caused by performing beam prediction on all beams.

### Second indication information

In some embodiments, the second indication information may be used to indicate information included in the first predicted value. In other words, the second indication information may be used to indicate a reporting requirement of the first predicted value. For example, the second indication information may be used to indicate that the first predicted value includes one or more of the following information: a cell-level predicted value when the first preset event is triggered; a cell-level predicted value that is recorded for one or more past instants when the first preset event is triggered; a cell-level predicted value at one or more future instants when the first preset event is triggered; a beam-level predicted value when the first preset event is triggered; a beam-level predicted value that is recorded for one or more past instants when the first preset event is triggered; or a beam-level predicted value at one or more future instants when the first preset event is triggered. In some embodiments, the second indication information may include a plurality of information fields, each information field is used to indicate one or more types of reporting requirements, and different information fields indicate different reporting requirements. Optionally, the second indication information is configured based on a frequency granularity, a cell granularity, or a measurement reporting information granularity.

### Configuration information of the first preset event

In some embodiments, the configuration information of the first preset event may include event identifier information and/or event parameter information.

The event identifier information may be used to indicate one or more events corresponding to the first preset event, for example, one or more events of the foregoing first-type preset event, one or more events of the second-type preset event, one or more events of the third-type preset event, and one or more events of the fourth-type preset event. For example, the event identifier information may be implemented by using a choice function. For example, a value of a choice function corresponds to an event identifier.

In some embodiments, the event parameter information may include one or more of the following parameters mentioned above: K1, K2, K3, K4, K, Q, the first threshold to the thirtieth threshold, the first time, the second time, the first offset, the second offset, the first reference point, the second reference point, the first absolute time instant, the periodic measurement reporting timer, of the time threshold W.

In some embodiments, the first predicted value and/or any type of measured value mentioned above may be associated with one or more of the following parameters: reference signal received power RSRP; reference signal received quality RSRQ; or a signal to interference plus noise ratio SINR.

In some embodiments, any type of information mentioned above may be carried by using any one of the following message types, or any type of message mentioned above may be any one of the following messages: NR positioning protocol A (NR positioning protocol A, NRPPa) message, Long Term Evolution Positioning Protocol (LTE positioning protocol, LPP) message, non-access stratum (non-access stratum, NAS) message, radio resource control protocol (radio resource control, RRC) message, medium access control control element (media access control control element, MAC CE) message, downlink control information (downlink control information, DCI) message, uplink control information (uplink control information, UCI) message, physical uplink control channel (physical uplink control channel, PUCCH) message, physical uplink shared channel (physical uplink shared channel, PUSCH) message, inter-node (inter-node) message, Xn interface message, F1 interface message, E1 interface message, NG interface message, core network service architecture-based message, or AI-dedicated message.

In some embodiments, any type of information mentioned above may be carried by using any one of the following message types, or any type of message mentioned above may be any one of the following messages: unicast message, multicast message, or broadcast message. An information source may transmit a unicast message through a unicast channel. Only a terminal device to which a corresponding unicast resource is allocated can attempt to receive the unicast message. The unicast message may also be referred to as dedicated signaling. An information source may transmit a multicast message through a multicast channel. A terminal device that is a group member in a coverage of a multicast signal can attempt to receive the multicast message. When joining a group, the terminal device obtains a resource related to the multicast channel. An information source may transmit a broadcast message through a broadcast channel, and any terminal device within a coverage of a broadcast signal can attempt to receive the broadcast message.

The method embodiments of this application are described above in detail with reference to FIG. 1 to FIG. 4. Apparatus embodiments of this application are described below in detail with reference to FIG. 5 to FIG. 7. It should be understood that the descriptions of the method embodiments correspond to the descriptions of the apparatus embodiments, and therefore, for parts that are not described in detail, one may refer to the foregoing method embodiments.

FIG. 5 is a schematic diagram of a wireless communication device according to an embodiment of this application. A device 500 may be the first device described above.

Referring to FIG. 5, the device 500 may include a transmitting unit 510.

The transmitting unit 510 is configured to transmit first information to a second device, where the first information is used to indicate a first predicted value of a first cell, and the first cell is a current serving cell of a terminal device and/or a neighboring cell of the serving cell.

In a possible implementation, the first predicted value includes a cell-level predicted value and/or a beam-level predicted value.

In a possible implementation, the first predicted value includes one or more of the following information: a predicted value at a current instant; a predicted value at one or more past instants; or a predicted value at one or more future instants.

In a possible implementation, the cell-level predicted value of the first cell at the first instant is determined based on one or more of the following information: cell-level measured values and/or cell-level predicted values of the first cell at past K1 instants relative to the first instant; measured values of a part of beams of the first cell and/or predicted values of a part of beams of the first cell at past K1 instants relative to the first instant; or a measured value of a part of beams of the first cell and/or predicted value of a part of beams of the first cell at the first instant, where K1 is a natural number greater than or equal to 1.

In a possible implementation, the beam-level predicted value of the first cell at the first instant is determined based on one or more of the following information: beam-level measured values of the first cell at past K2 instants relative to the first instant; measured values of a part of beams of the first cell and/or predicted values of a part of beams of the first cell at past K2 instants relative to the first instant; or a measured value of a part of beams of the first cell at the first instant, where K2 is a natural number greater than or equal to 1.

In a possible implementation, the first instant is any one of one or more instants associated with the first predicted value.

In a possible implementation, the K1 instants or the K2 instants meet one or more of the following conditions: a time difference between any two adjacent instants is greater than or equal to a first threshold; a time difference between any two adjacent instants is less than or equal to a second threshold; a time difference between the first instant and a second instant in the K1 instants or the K2 instants is less than or equal to a third threshold; a time difference between the first instant and a second instant in the K1 instants or the K2 instants is greater than or equal to a fourth threshold; a time difference between the first instant and a third instant in the K1 instants or the K2 instants is less than or equal to a fifth threshold; or a time difference between the first instant and a third instant in the K1 instants or the K2 instants is greater than or equal to a sixth threshold. The second instant is an instant in the K1 instants or the K2 instants that is farthest from the first instant, and the third instant is an instant in the K1 instants or the K2 instants that is closest to the first instant.

In a possible implementation, if the first predicted value of the first cell includes predicted values at past K3 instants before an instant when a first preset event is triggered, the K3 instants meet one or more of the following conditions: a time difference between any two adjacent instants is greater than or equal to a seventh threshold; a time difference between any two adjacent instants is less than or equal to an eighth threshold; a time difference between a triggering instant of the first preset event and a fourth instant in the K3 instants is less than or equal to a ninth threshold; a time difference between a triggering instant of the first preset event and a fourth instant in the K3 instants is greater than or equal to a tenth threshold; a time difference between a triggering instant of the first preset event and a fifth instant in the K3 instants is less than or equal to an eleventh threshold; or a time difference between a triggering instant of the first preset event and a fifth instant in the K3 instants is greater than or equal to a twelfth threshold. The fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

In a possible implementation, if the first predicted value of the first cell includes predicted values of future K4 instants after an instant when the first preset event is triggered, the K4 instants meet one or more of the following conditions: a time difference between any two adjacent instants is greater than or equal to a thirteenth threshold; a time difference between any two adjacent instants is less than or equal to a fourteenth threshold; a time difference between the triggering instant of the first preset event and a sixth instant in the K4 instants is less than or equal to a fifteenth threshold; a time difference between the triggering instant of the first preset event and a sixth instant in the K4 instants is greater than or equal to a sixteenth threshold; a time difference between the triggering instant of the first preset event and a seventh instant in the K4 instants is less than or equal to a seventeenth threshold; or a time difference between the triggering instant of the first preset event and a seventh instant in the K4 instants is greater than or equal to an eighteenth threshold. The sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

In a possible implementation, the first predicted value is associated with the triggering instant of the first preset event, and the first preset event includes a first-type preset event. The first-type preset event includes one or more of the following events: a measured value of the serving cell is greater than or equal to a nineteenth threshold; a measured value of the serving cell is less than or equal to a twentieth threshold; a difference between a measured value of the neighboring cell and a measured value of a primary cell or a primary secondary cell is greater than or equal to a first offset; a measured value of the neighboring cell is greater than or equal to a twenty-first threshold; a measured value of a primary cell or a primary secondary cell is less than a twenty-second threshold, and a measured value of the neighboring cell or a secondary cell is greater than a twenty-third threshold; a difference between a measured value of the neighboring cell and a measured value of a secondary cell is greater than or equal to a second offset; a distance between the terminal device and a first reference point is greater than or equal to a twenty-fourth threshold; a distance between the terminal device and a second reference point is less than or equal to a twenty-fifth threshold; a measured value of the neighboring cell is greater than or equal to a twenty-sixth threshold, and the neighboring cell and the serving cell are based on different radio access technologies; a measured value of a primary cell is less than a twenty-seventh threshold, and a measured value of the neighboring cell is greater than a twenty-eighth threshold, where the neighboring cell and the serving cell are based on different radio access technologies; a periodic measurement reporting timer expires; a first absolute time instant is reached; or a first time period has elapsed since successful reception of a measurement configuration.

In a possible implementation, the first preset event includes a second-type preset event, and the second-type preset event includes that the first-type preset event is predicted to occur within a second time period.

In a possible implementation, the first preset event includes a third-type preset event, and the third-type preset event includes that the first-type preset event is predicted to occur within the second time period; and the measured value of the serving cell is less than or equal to a twenty-ninth threshold.

In a possible implementation, the first preset event includes a fourth-type preset event, and the fourth-type preset event includes that the first-type preset event is predicted to occur within the second time period and the measured value of the serving cell is less than or equal to a thirtieth threshold and lasts for a third time period.

In a possible implementation, the first information is further used to indicate a measured value of the first cell.

In a possible implementation, the first information is associated with absolute time information and/or relative time information.

In a possible implementation, a configuration granularity of a parameter associated with the first predicted value is one or more of the following: a frequency range granularity; a carrier granularity; a band granularity; a band combination granularity; a device type granularity; or a cell granularity.

In a possible implementation, the device further includes: a receiving unit, configured to receive second information transmitted by the second device, where the second information is used to indicate configuration information associated with the first predicted value.

In a possible implementation, the second information includes one or more of the following information: first indication information; one or more pieces of physical cell identity PCI information supporting or allowing obtaining of the first predicted value; beam information supporting or allowing obtaining of a measured value; beam information supporting or allowing obtaining of a predicted value; second indication information; or configuration information of the first preset event. The first indication information is used to indicate whether to support or allow obtaining of the first predicted value, and the second indication information is used to indicate a reporting requirement of the first predicted value.

In a possible implementation, the first indication information is associated with one or more of the following information: frequency information; PCI information; measurement object information; measurement identifier information; measurement reporting configuration information; or the configuration information of the first preset event.

In a possible implementation, the configuration information of the first preset event includes event identifier information and/or event parameter information.

In a possible implementation, at least one the first predicted value or the measured value is associated with one or more of the following parameters: reference signal received power RSRP; reference signal received quality RSRQ; or a signal to interference plus noise ratio SINR.

In a possible implementation, the first device is a terminal device or a network device.

FIG. 6 is a schematic diagram of another wireless communication device according to an embodiment of this application. A device 600 may be the second device described above.

Referring to FIG. 6, the device 600 may include a transmitting unit 610.

The receiving unit 610 is configured to receive first information transmitted by a first device, where the first information is used to indicate a first predicted value of a first cell, and the first cell is a current serving cell of a terminal device and/or a neighboring cell of the serving cell.

In a possible implementation, the first predicted value includes a cell-level predicted value and/or a beam-level predicted value.

In a possible implementation, the first predicted value includes one or more of the following information: a predicted value at a current instant; a predicted value at one or more past instants; or a predicted value at one or more future instants.

In a possible implementation, the cell-level predicted value of the first cell at the first instant is determined based on one or more of the following information: cell-level measured values and/or cell-level predicted values of the first cell at past K1 instants relative to the first instant; measured values of a part of beams of the first cell and/or predicted values of a part of beams of the first cell at past K1 instants relative to the first instant; or a measured value of a part of beams of the first cell and/or predicted value of a part of beams of the first cell at the first instant, where K1 is a natural number greater than or equal to 1.

In a possible implementation, the beam-level predicted value of the first cell at the first instant is determined based on one or more of the following information: beam-level measured values of the first cell at past K2 instants relative to the first instant; measured values of a part of beams of the first cell and/or predicted values of a part of beams of the first cell at past K2 instants relative to the first instant; or a measured value of a part of beams of the first cell at the first instant, where K2 is a natural number greater than or equal to 1.

In a possible implementation, the first instant is any one of one or more instants associated with the first predicted value.

In a possible implementation, the K1 instants or the K2 instants meet one or more of the following conditions: a time difference between any two adjacent instants is greater than or equal to a first threshold; a time difference between any two adjacent instants is less than or equal to a second threshold; a time difference between the first instant and a second instant in the K1 instants or the K2 instants is less than or equal to a third threshold; a time difference between the first instant and a second instant in the K1 instants or the K2 instants is greater than or equal to a fourth threshold; a time difference between the first instant and a third instant in the K1 instants or the K2 instants is less than or equal to a fifth threshold; or a time difference between the first instant and a third instant in the K1 instants or the K2 instants is greater than or equal to a sixth threshold. The second instant is an instant in the K1 instants or the K2 instants that is farthest from the first instant, and the third instant is an instant in the K1 instants or the K2 instants that is closest to the first instant.

In a possible implementation, if the first predicted value of the first cell includes predicted values at past K3 instants before an instnt when a first preset event is triggered, the K3 instants meet one or more of the following conditions: a time difference between any two adjacent instants is greater than or equal to a seventh threshold; a time difference between any two adjacent instants is less than or equal to an eighth threshold; a time difference between a triggering instant of the first preset event and a fourth instant in the K3 instants is less than or equal to a ninth threshold; a time difference between a triggering instant of the first preset event and a fourth instant in the K3 instants is greater than or equal to a tenth threshold; a time difference between a triggering instant of the first preset event and a fifth instant in the K3 instants is less than or equal to an eleventh threshold; or a time difference between a triggering instant of the first preset event and a fifth instant in the K3 instants is greater than or equal to a twelfth threshold. The fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

In a possible implementation, if the first predicted value of the first cell includes predicted values at future K4 instants after an instant when the first preset event is triggered, the K4 instants meet one or more of the following conditions: a time difference between any two adjacent instants is greater than or equal to a thirteenth threshold; a time difference between any two adjacent instants is less than or equal to a fourteenth threshold; a time difference between the triggering instant of the first preset event and a sixth instant in the K4 instants is less than or equal to a fifteenth threshold; a time difference between the triggering instant of the first preset event and a sixth instant in the K4 instants is greater than or equal to a sixteenth threshold; a time difference between the triggering instant of the first preset event and a seventh instant in the K4 instants is less than or equal to a seventeenth threshold; or a time difference between the triggering instant of the first preset event and a seventh instant in the K4 instants is greater than or equal to an eighteenth threshold. The sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

In a possible implementation, the first predicted value is associated with the triggering instant of the first preset event, and the first preset event includes a first-type preset event. The first-type preset event includes one or more of the following events: a measured value of the serving cell is greater than or equal to a nineteenth threshold; a measured value of the serving cell is less than or equal to a twentieth threshold; a difference between a measured value of the neighboring cell and a measured value of a primary cell or a primary secondary cell is greater than or equal to a first offset; a measured value of the neighboring cell is greater than or equal to a twenty-first threshold; a measured value of a primary cell or a primary secondary cell is less than a twenty-second threshold, and a measured value of the neighboring cell or a secondary cell is greater than a twenty-third threshold; a difference between a measured value of the neighboring cell and a measured value of a secondary cell is greater than or equal to a second offset; a distance between the terminal device and a first reference point is greater than or equal to a twenty-fourth threshold; a distance between the terminal device and a second reference point is less than or equal to a twenty-fifth threshold; a measured value of the neighboring cell is greater than or equal to a twenty-sixth threshold, and the neighboring cell and the serving cell are based on different radio access technologies; a measured value of a primary cell is less than a twenty-seventh threshold, and a measured value of the neighboring cell is greater than a twenty-eighth threshold. The neighboring cell and the serving cell are based on different radio access technologies; a periodic measurement reporting timer expires; a first absolute time instant is reached; or a first time period has elapsed since successful reception of a measurement configuration.

In a possible implementation, the first preset event includes a second-type preset event, and the second-type preset event includes that the first-type preset event is predicted to occur within a second time period.

In a possible implementation, the first preset event includes a third-type preset event, and the third-type preset event includes that the first-type preset event is predicted to occur within the second time period; and the measured value of the serving cell is less than or equal to a twenty-ninth threshold.

In a possible implementation, the first preset event includes a fourth-type preset event, and the fourth-type preset event includes that the first-type preset event is predicted to occur within the second time period and the measured value of the serving cell is less than or equal to a thirtieth threshold and lasts for a third time period.

In a possible implementation, the first information is further used to indicate a measured value of the first cell.

In a possible implementation, the first information is associated with absolute time information and/or relative time information.

In a possible implementation, a configuration granularity of a parameter associated with the first predicted value is one or more of the following: a frequency range granularity; a carrier granularity; a band granularity; a band combination granularity; a device type granularity; or a cell granularity.

In a possible implementation, the device further includes: a transmitting unit, configured to transmit second information to the first device, where the second information is used to indicate configuration information associated with the first predicted value.

In a possible implementation, the second information includes one or more of the following information: first indication information; one or more pieces of physical cell identity PCI information supporting or allowing obtaining of the first predicted value; beam information supporting or allowing obtaining of a measured value; beam information supporting or allowing obtaining of a predicted value; second indication information; or configuration information of the first preset event. The first indication information is used to indicate whether to support or allow obtaining of the first predicted value, and the second indication information is used to indicate a reporting requirement of the first predicted value.

In a possible implementation, the first indication information is associated with one or more of the following information: frequency information; PCI information; measurement object information; measurement identifier information; measurement reporting configuration information; or the configuration information of the first preset event.

In a possible implementation, the configuration information of the first preset event includes event identifier information and/or event parameter information.

In a possible implementation, at least one of the first predicted value or the measured value is associated with one or more of the following parameters: reference signal received power RSRP; reference signal received quality RSRQ; or a signal to interference plus noise ratio SINR.

In a possible implementation, the second device is a terminal device or a network device.

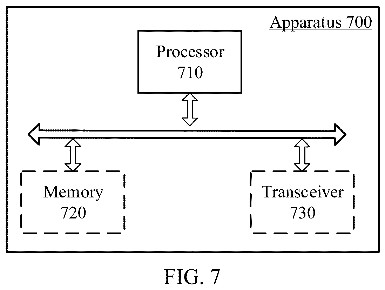

FIG. 7 is a schematic structural diagram of a communication apparatus according to an embodiment of this application. Dashed lines in FIG. 7 indicate that a unit or module is optional. The apparatus 700 may be configured to implement the method described in the foregoing method embodiments. The apparatus 700 may be a chip, a first device, or a second device.

The apparatus 700 may include one or more processors 710. The processor 710 may support the apparatus 700 in implementing the method described in the foregoing method embodiments. The processor 710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 700 may further include one or more memories 720. The memory 720 stores a program, and the program may be executed by the processor 710, to cause the processor 710 to execute the method described in the foregoing method embodiment. The memory 720 may be separate from the processor 710 or may be integrated into the processor 710.

The apparatus 700 may further include a transceiver 730. The processor 710 may communicate with another device or chip through the transceiver 730. For example, the processor 710 may transmit data to and receive data from another device or chip through the transceiver 730.

An embodiment of this application further provides a computer-readable storage medium for storing a program. The computer-readable storage medium may be applied to the first device or the second device provided in embodiments of this application, and the program causes a computer to execute the method executed by the wireless communication device in various embodiments of this application.

An embodiment of this application further provides a computer program product. The computer program product includes a program. The computer program product may be applied to the first device or the second device provided in embodiments of this application, and the program causes a computer to execute the method executed by the wireless communication device in various embodiments of this application.

An embodiment of this application further provides a computer program. The computer program may be applied to the wireless communication device provided in embodiments of this application, and the computer program causes a computer to execute the method executed by the wireless communication device in embodiments of this application.

It should be understood that the terms "system" and "network" in this application may be used interchangeably. In addition, the terms used in this application are merely used to explain specific embodiments of this application, and are not intended to limit this application. In the specification, claims, and accompanying drawings of this application, the terms "first", "second", "third", "fourth", and so on are intended to distinguish between different objects but do not describe a particular order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by using A; or may mean that A indirectly indicates B, for example, A indicates C, and B may be obtained by using C; or may mean that there is an association relationship between A and B.

In embodiments of this application, "B corresponding to A" means that B is associated with A, and B may be determined based on A. However, it should be further understood that determining B based on A does not mean that B is determined based only on A. B may alternatively be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communication field, which may include, for example, an LTE protocol, an NR protocol, and a related protocol applied to a future communication system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In various embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first device, first information to a second device, wherein the first information is used to indicate a first predicted value of a first cell, and the first cell is a current serving cell of a terminal device and/or a neighboring cell of the serving cell.

2. The method according to claim 1, wherein the first predicted value comprises a cell-level predicted value and/or a beam-level predicted value.

3. The method according to claim 2, wherein the first predicted value comprises one or more of the following information:
a predicted value at a current instant;
a predicted value at one or more past instants; or
a predicted value at one or more future instants.

4. The method according to claim 2 or 3, wherein the cell-level predicted value of the first cell at a first instant is determined based on one or more of the following information:
cell-level measured values and/or cell-level predicted values of the first cell at past K1 instants relative to the first instant;
measured values of a part of beams of the first cell and/or predicted values of a part of beams of the first cell at past K1 instants relative to the first instant; or
a measured value of a part of beams of the first cell and/or predicted value of a part of beams of the first cell at the first instant,
wherein K1 is a natural number greater than or equal to 1.

5. The method according to any one of claims 2 to 4, wherein the beam-level predicted value of the first cell at the first instant is determined based on one or more of the following information:
beam-level measured values of the first cell at past K2 instants relative to the first instant;
measured values of a part of beams of the first cell and/or predicted values of a part of beams of the first cell at past K2 instants relative to the first instant; or
a measured value of a part of beams of the first cell at the first instant,
wherein K2 is a natural number greater than or equal to 1.

6. The method according to claim 4 or 5, wherein the first instant is any one of one or more instants associated with the first predicted value.

7. The method according to any one of claims 4 to 6, wherein the K1 instants or the K2 instants meet one or more of the following conditions:
a time difference between any two adjacent instants is greater than or equal to a first threshold;
a time difference between any two adjacent instants is less than or equal to a second threshold;
a time difference between the first instant and a second instant in the K1 instants or the K2 instants is less than or equal to a third threshold;
a time difference between the first instant and a second instant in the K1 instants or the K2 instants is greater than or equal to a fourth threshold;
a time difference between the first instant and a third instant in the K1 instants or the K2 instants is less than or equal to a fifth threshold; or
a time difference between the first instant and a third instant in the K1 instants or the K2 instants is greater than or equal to a sixth threshold,
wherein the second instant is an instant in the K1 instants or the K2 instants that is farthest from the first instant, and the third instant is an instant in the K1 instants or the K2 instants that is closest to the first instant.

8. The method according to any one of claims 1 to 7, wherein if the first predicted value of the first cell comprises predicted values at past K3 instants before an instant when a first preset event is triggered, the K3 instants meet one or more of the following conditions:
a time difference between any two adjacent instants is greater than or equal to a seventh threshold;
a time difference between any two adjacent instants is less than or equal to an eighth threshold;
a time difference between a triggering instant of the first preset event and a fourth instant in the K3 instants is less than or equal to a ninth threshold;
a time difference between a triggering instant of the first preset event and a fourth instant in the K3 instants is greater than or equal to a tenth threshold;
a time difference between a triggering instant of the first preset event and a fifth instant in the K3 instants is less than or equal to an eleventh threshold; or
a time difference between a triggering instant of the first preset event and a fifth instant in the K3 instants is greater than or equal to a twelfth threshold,
wherein the fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

9. The method according to any one of claims 1 to 8, wherein if the first predicted value of the first cell comprises predicted values of future K4 instants after an instant when the first preset event is triggered, the K4 instants meet one or more of the following conditions:
a time difference between any two adjacent instants is greater than or equal to a thirteenth threshold;
a time difference between any two adjacent instants is less than or equal to a fourteenth threshold;
a time difference between the triggering instant of the first preset event and a sixth instant in the K4 instants is less than or equal to a fifteenth threshold;
a time difference between the triggering instant of the first preset event and a sixth instant in the K4 instants is greater than or equal to a sixteenth threshold;
a time difference between the triggering instant of the first preset event and a seventh instant in the K4 instants is less than or equal to a seventeenth threshold; or
a time difference between the triggering instant of the first preset event and a seventh instant in the K4 instants is greater than or equal to an eighteenth threshold,
wherein the sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

10. The method according to any one of claims 1 to 9, wherein the first predicted value is associated with a triggering instant of a first preset event, the first preset event comprises a first-type preset event, and the first-type preset event comprises one or more of the following events:
a measured value of the serving cell is greater than or equal to a nineteenth threshold;
a measured value of the serving cell is less than or equal to a twentieth threshold;
a difference between a measured value of the neighboring cell and a measured value of a primary cell or a primary secondary cell is greater than or equal to a first offset;
a measured value of the neighboring cell is greater than or equal to a twenty-first threshold;
a measured value of a primary cell or a primary secondary cell is less than a twenty-second threshold, and a measured value of the neighboring cell or a secondary cell is greater than a twenty-third threshold;
a difference between a measured value of the neighboring cell and a measured value of a secondary cell is greater than or equal to a second offset;
a distance between the terminal device and a first reference point is greater than or equal to a twenty-fourth threshold;
a distance between the terminal device and a second reference point is less than or equal to a twenty-fifth threshold;
a measured value of the neighboring cell is greater than or equal to a twenty-sixth threshold, and the neighboring cell and the serving cell are based on different radio access technologies;
a measured value of a primary cell is less than a twenty-seventh threshold, and a measured value of the neighboring cell is greater than a twenty-eighth threshold, wherein the neighboring cell and the serving cell are based on different radio access technologies;
a periodic measurement reporting timer expires;
a first absolute time instant is reached; or
a first time period has elapsed since successful reception of a measurement configuration.

11. The method according to claim 10, wherein the first preset event comprises a second-type preset event, and the second-type preset event comprises that the first-type preset event is predicted to occur within a second time period.

12. The method according to claim 10 or 11, wherein the first preset event comprises a third-type preset event, and the third-type preset event comprises that the first-type preset event is predicted to occur within the second time period and the measured value of the serving cell is less than or equal to a twenty-ninth threshold.

13. The method according to any one of claims 10 to 12, wherein the first preset event comprises a fourth-type preset event, and the fourth-type preset event comprises that the first-type preset event is predicted to occur within the second time period and the measured value of the serving cell is less than or equal to a thirtieth threshold and lasts for a third time period.

14. The method according to any one of claims 1 to 13, wherein the first information is further used to indicate a measured value of the first cell.

15. The method according to any one of claims 1 to 14, wherein the first information is associated with absolute time information and/or relative time information.

16. The method according to any one of claims 1 to 15, wherein a configuration granularity of a parameter associated with the first predicted value comprises one or more of the following:
a frequency range granularity;
a carrier granularity;
a band granularity;
a band combination granularity;
a device type granularity; or
a cell granularity.

17. The method according to any one of claims 1 to 16, wherein the method further comprises:
receiving, by the first device, second information transmitted by the second device, wherein the second information is used to indicate configuration information associated with the first predicted value.

18. The method according to claim 17, wherein the second information comprises one or more of following information:
first indication information;
one or more pieces of physical cell identity PCI information supporting or allowing obtaining of the first predicted value;
beam information supporting or allowing obtaining of a measured value;
beam information supporting or allowing obtaining of a predicted value;
second indication information; or
configuration information of the first preset event,
wherein the first indication information is used to indicate whether to support or allow obtaining of the first predicted value, and the second indication information is used to indicate a reporting requirement of the first predicted value.

19. The method according to claim 18, wherein the first indication information is associated with one or more of the following information:
frequency information;
PCI information;
measurement object information;
measurement identifier information;
measurement reporting configuration information; or
the configuration information of the first preset event.

20. The method according to claim 18 or 19, wherein the configuration information of the first preset event comprises event identifier information and/or event parameter information.

21. The method according to any one of claims 1 to 20, wherein at least one of the first predicted value or the measured value is associated with one or more of the following parameters:
reference signal received power RSRP;
reference signal received quality RSRQ; or
a signal to interference plus noise ratio SINR.

22. The method according to any one of claims 1 to 21, wherein the first device is a terminal device or a network device.

23. A wireless communication method, comprising:
receiving, by a second device, first information transmitted by a first device, wherein the first information is used to indicate a first predicted value of a first cell, and the first cell is a current serving cell of a terminal device and/or a neighboring cell of the serving cell.

24. The method according to claim 23, wherein the first predicted value comprises a cell-level predicted value and/or a beam-level predicted value.

25. The method according to claim 24, wherein the first predicted value comprises one or more of the following information:
a predicted value at a current instant;
a predicted value at one or more past instants; or
a predicted value at one or more future instants.

26. The method according to claim 24 or 25, wherein the cell-level predicted value of the first cell at a first instant is determined based on one or more of the following information:
cell-level measured values and/or cell-level predicted values of the first cell at past K1 instants relative to the first instant;
measured values of a part of beams of the first cell and/or predicted values of a part of beams of the first cell at past K1 instants relative to the first instant; or
a measured value of a part of beams of the first cell and/or predicted value of a part of beams of the first cell at the first instant,
wherein K1 is a natural number greater than or equal to 1.

27. The method according to any one of claims 24 to 26, wherein the beam-level predicted value of the first cell at the first instant is determined based on one or more of the following information:
beam-level measured values of the first cell at past K2 instants relative to the first instant;
measured values of a part of beams of the first cell and/or predicted values of a part of beams of the first cell at past K2 instants relative to the first instant; or
a measured value of a part of beams of the first cell at the first instant,
wherein K2 is a natural number greater than or equal to 1.

28. The method according to claim 26 or 27, wherein the first instant is any one of one or more instants associated with the first predicted value.

29. The method according to any one of claims 26 to 28, wherein the K1 instants or the K2 instants meet one or more of the following conditions:
a time difference between any two adjacent instants is greater than or equal to a first threshold;
a time difference between any two adjacent instants is less than or equal to a second threshold;
a time difference between the first instant and a second instant in the K1 instants or the K2 instants is less than or equal to a third threshold;
a time difference between the first instant and a second instant in the K1 instants or the K2 instants is greater than or equal to a fourth threshold;
a time difference between the first instant and a third instant in the K1 instants or the K2 instants is less than or equal to a fifth threshold; or
a time difference between the first instant and a third instant in the K1 instants or the K2 instants is greater than or equal to a sixth threshold,
wherein the second instant is an instant in the K1 instants or the K2 instants that is farthest from the first instant, and the third instant is an instant in the K1 instants or the K2 instants that is closest to the first instant.

30. The method according to any one of claims 23 to 29, wherein if the first predicted value of the first cell comprises predicted values at past K3 instants before an instant when a first preset event is triggered, the K3 instants meet one or more of the following conditions:
a time difference between any two adjacent instants is greater than or equal to a seventh threshold;
a time difference between any two adjacent instants is less than or equal to an eighth threshold;
a time difference between a triggering instant of the first preset event and a fourth instant in the K3 instants is less than or equal to a ninth threshold;
a time difference between a triggering instant of the first preset event and a fourth instant in the K3 instants is greater than or equal to a tenth threshold;
a time difference between a triggering instant of the first preset event and a fifth instant in the K3 instants is less than or equal to an eleventh threshold; or
a time difference between a triggering instant of the first preset event and a fifth instant in the K3 instants is greater than or equal to a twelfth threshold,
wherein the fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

31. The method according to any one of claims 23 to 30, wherein if the first predicted value of the first cell comprises predicted values at future K4 instants after an instant when the first preset event is triggered, the K4 instants meet one or more of the following conditions:
a time difference between any two adjacent instants is greater than or equal to a thirteenth threshold;
a time difference between any two adjacent instants is less than or equal to a fourteenth threshold;
a time difference between the triggering instant of the first preset event and a sixth instant in the K4 instants is less than or equal to a fifteenth threshold;
a time difference between the triggering instant of the first preset event and a sixth instant in the K4 instants is greater than or equal to a sixteenth threshold;
a time difference between the triggering instant of the first preset event and a seventh instant in the K4 instants is less than or equal to a seventeenth threshold; or
a time difference between the triggering instant of the first preset event and a seventh instant in the K4 instants is greater than or equal to an eighteenth threshold,
wherein the sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

32. The method according to any one of claims 23 to 31, wherein the first predicted value is associated with the triggering instant of the first preset event, the first preset event comprises a first-type preset event, and the first-type preset event comprises one or more of the following events:
a measured value of the serving cell is greater than or equal to a nineteenth threshold;
a measured value of the serving cell is less than or equal to a twentieth threshold;
a difference between a measured value of the neighboring cell and a measured value of a primary cell or a primary secondary cell is greater than or equal to a first offset;
a measured value of the neighboring cell is greater than or equal to a twenty-first threshold;
a measured value of a primary cell or a primary secondary cell is less than a twenty-second threshold, and a measured value of the neighboring cell or a secondary cell is greater than a twenty-third threshold;
a difference between a measured value of the neighboring cell and a measured value of a secondary cell is greater than or equal to a second offset;
a distance between the terminal device and a first reference point is greater than or equal to a twenty-fourth threshold;
a distance between the terminal device and a second reference point is less than or equal to a twenty-fifth threshold;
a measured value of the neighboring cell is greater than or equal to a twenty-sixth threshold, and the neighboring cell and the serving cell are based on different radio access technologies;
a measured value of a primary cell is less than a twenty-seventh threshold, and a measured value of the neighboring cell is greater than a twenty-eighth threshold, wherein the neighboring cell and the serving cell are based on different radio access technologies;
a periodic measurement reporting timer expires;
a first absolute time instant is reached; or
a first time period has elapsed since successful reception of a measurement configuration.

33. The method according to claim 32, wherein the first preset event comprises a second-type preset event, and the second-type preset event comprises that the first-type preset event is predicted to occur within a second time period.

34. The method according to claim 32 or 33, wherein the first preset event comprises a third-type preset event, and the third-type preset event comprises that the first-type preset event is predicted to occur within the second time period; and the measured value of the serving cell is less than or equal to a twenty-ninth threshold.

35. The method according to any one of claims 32 to 34, wherein the first preset event comprises a fourth-type preset event, and the fourth-type preset event comprises that the first-type preset event is predicted to occur within the second time period and the measured value of the serving cell is less than or equal to a thirtieth threshold and lasts for a third time period.

36. The method according to any one of claims 23 to 35, wherein the first information is further used to indicate a measured value of the first cell.

37. The method according to any one of claims 23 to 36, wherein the first information is associated with absolute time information and/or relative time information.

38. The method according to any one of claims 23 to 37, wherein a configuration granularity of a parameter associated with the first predicted value comprises one or more of the following:
a frequency range granularity;
a carrier granularity;
a band granularity;
a band combination granularity;
a device type granularity; or
a cell granularity.

39. The method according to any one of claims 23 to 38, wherein the method further comprises:
transmitting, by the second device, second information to the first device, wherein the second information is used to indicate configuration information associated with the first predicted value.

40. The method according to claim 39, wherein the second information comprises one or more of following information:
first indication information;
one or more pieces of physical cell identity PCI information supporting or allowing obtaining of the first predicted value;
beam information supporting or allowing obtaining of a measured value;
beam information supporting or allowing obtaining of a predicted value;
second indication information; or
configuration information of the first preset event,
wherein the first indication information is used to indicate whether to support or allow obtaining of the first predicted value, and the second indication information is used to indicate a reporting requirement of the first predicted value.

41. The method according to claim 40, wherein the first indication information is associated with one or more of the following information:
frequency information;
PCI information;
measurement object information;
measurement identifier information;
measurement reporting configuration information; or
the configuration information of the first preset event.

42. The method according to claim 40 or 41, wherein the configuration information of the first preset event comprises event identifier information and/or event parameter information.

43. The method according to any one of claims 23 to 42, wherein at least one the first predicted value or the measured value is associated with one or more of the following parameters:
reference signal received power RSRP;
reference signal received quality RSRQ; or
a signal to interference plus noise ratio SINR.

44. The method according to any one of claims 23 to 43, wherein the second device is a terminal device or a network device.

45. A wireless communication device, wherein the device is a first device, and the device comprises:
a transmitting unit, configured to transmit first information to a second device, wherein the first information is used to indicate a first predicted value of a first cell, and the first cell is a current serving cell of a terminal device and/or a neighboring cell of the serving cell.

46. The device according to claim 45, wherein the first predicted value comprises a cell-level predicted value and/or a beam-level predicted value.

47. The device according to claim 46, wherein the first predicted value comprises one or more of the following information:
a predicted value at a current instant
a predicted value at one or more past instants; or
a predicted value at one or more future instants.

48. The device according to claim 46 or 47, wherein the cell-level predicted value of the first cell at a first instant is determined based on one or more of the following information:
cell-level measured values and/or cell-level predicted values of the first cell at past K1 instants relative to the first instant;
measured values of a part of beams of the first cell and/or predicted values of a part of beams of the first cell at past K1 instants relative to the first instant; or
a measured value of a part of beams of the first cell and/or predicted value of a part of beams of the first cell at the first instant,
wherein K1 is a natural number greater than or equal to 1.

49. The device according to any one of claims 46 to 48, wherein the beam-level predicted value of the first cell at the first instant is determined based on one or more of the following information:
beam-level measured values of the first cell at past K2 instants relative to the first instant;
measured values of a part of beams of the first cell and/or predicted values of a part of beams of the first cell at past K2 instants relative to the first instant; or
a measured value of a part of beams of the first cell at the first instant,
wherein K2 is a natural number greater than or equal to 1.

50. The device according to claim 48 or 49, wherein the first instant is any one of one or more instants associated with the first predicted value.

51. The device according to any one of claims 48 to 50, wherein the K1 instants or the K2 instants meet one or more of the following conditions:
a time difference between any two adjacent instants is greater than or equal to a first threshold;
a time difference between any two adjacent instants is less than or equal to a second threshold;
a time difference between the first instant and a second instant in the K1 instants or the K2 instants is less than or equal to a third threshold;
a time difference between the first instant and a second instant in the K1 instants or the K2 instants is greater than or equal to a fourth threshold;
a time difference between the first instant and a third instant in the K1 instants or the K2 instants is less than or equal to a fifth threshold; or
a time difference between the first instant and a third instant in the K1 instants or the K2 instants is greater than or equal to a sixth threshold,
wherein the second instant is an instant in the K1 instants or the K2 instants that is farthest from the first instant, and the third instant is an instant in the K1 instants or the K2 instants that is closest to the first instant.

52. The device according to any one of claims 45 to 51, wherein if the first predicted value of the first cell comprises predicted values at past K3 instants before an instant when a first preset event is triggered, the K3 instants meet one or more of the following conditions:
a time difference between any two adjacent instants is greater than or equal to a seventh threshold;
a time difference between any two adjacent instants is less than or equal to an eighth threshold;
a time difference between a triggering instant of the first preset event and a fourth instant in the K3 instants is less than or equal to a ninth threshold;
a time difference between a triggering instant of the first preset event and a fourth instant in the K3 instants is greater than or equal to a tenth threshold;
a time difference between a triggering instant of the first preset event and a fifth instant in the K3 instants is less than or equal to an eleventh threshold; or
a time difference between a triggering instant of the first preset event and a fifth instant in the K3 instants is greater than or equal to a twelfth threshold,
wherein the fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

53. The device according to any one of claims 45 to 52, wherein if the first predicted value of the first cell comprises predicted values at future K4 instants after an instant when the first preset event is triggered, the K4 instants meet one or more of the following conditions:
a time difference between any two adjacent instants is greater than or equal to a thirteenth threshold;
a time difference between any two adjacent instants is less than or equal to a fourteenth threshold;
a time difference between the triggering instant of the first preset event and a sixth instant in the K4 instants is less than or equal to a fifteenth threshold;
a time difference between the triggering instant of the first preset event and a sixth instant in the K4 instants is greater than or equal to a sixteenth threshold;
a time difference between the triggering instant of the first preset event and a seventh instant in the K4 instants is less than or equal to a seventeenth threshold; or
a time difference between the triggering instant of the first preset event and a seventh instant in the K4 instants is greater than or equal to an eighteenth threshold,
wherein the sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

54. The device according to any one of claims 45 to 53, wherein the first predicted value is associated with the triggering instant of the first preset event, the first preset event comprises a first-type preset event, and the first-type preset event comprises one or more of the following events:
a measured value of the serving cell is greater than or equal to a nineteenth threshold;
a measured value of the serving cell is less than or equal to a twentieth threshold;
a difference between a measured value of the neighboring cell and a measured value of a primary cell or a primary secondary cell is greater than or equal to a first offset;
a measured value of the neighboring cell is greater than or equal to a twenty-first threshold;
a measured value of a primary cell or a primary secondary cell is less than a twenty-second threshold, and a measured value of the neighboring cell or a secondary cell is greater than a twenty-third threshold;
a difference between a measured value of the neighboring cell and a measured value of a secondary cell is greater than or equal to a second offset;
a distance between the terminal device and a first reference point is greater than or equal to a twenty-fourth threshold;
a distance between the terminal device and a second reference point is less than or equal to a twenty-fifth threshold;
a measured value of the neighboring cell is greater than or equal to a twenty-sixth threshold, and the neighboring cell and the serving cell are based on different radio access technologies;
a measured value of a primary cell is less than a twenty-seventh threshold, and a measured value of the neighboring cell is greater than a twenty-eighth threshold, wherein the neighboring cell and the serving cell are based on different radio access technologies;
a periodic measurement reporting timer expires;
a first absolute time instant is reached; or
a first time period has elapsed since successful reception of a measurement configuration.

55. The device according to claim 54, wherein the first preset event comprises a second-type preset event, and the second-type preset event comprises that the first-type preset event is predicted to occur within a second time period.

56. The device according to claim 54 or 55, wherein the first preset event comprises a third-type preset event, and the third-type preset event comprises that the first-type preset event is predicted to occur within the second time period; and the measured value of the serving cell is less than or equal to a twenty-ninth threshold.

57. The device according to any one of claims 54 to 56, wherein the first preset event comprises a fourth-type preset event, and the fourth-type preset event comprises that the first-type preset event is predicted to occur within the second time period and the measured value of the serving cell is less than or equal to a thirtieth threshold and lasts for a third time period.

58. The device according to any one of claims 45 to 57, wherein the first information is further used to indicate a measured value of the first cell.

59. The device according to any one of claims 45 to 58, wherein the first information is associated with absolute time information and/or relative time information.

60. The device according to any one of claims 45 to 59, wherein a configuration granularity of a parameter associated with the first predicted value comprises one or more of the following:
a frequency range granularity;
a carrier granularity;
a band granularity;
a band combination granularity;
a device type granularity; or
a cell granularity.

61. The device according to any one of claims 45 to 60, further comprising:
a receiving unit, configured to receive second information transmitted by the second device, wherein the second information is used to indicate configuration information associated with the first predicted value.

62. The device according to claim 61, wherein the second information comprises one or more of the following information:
first indication information;
one or more pieces of physical cell identity PCI information supporting or allowing obtaining of the first predicted value;
beam information supporting or allowing obtaining of a measured value;
beam information supporting or allowing obtaining of a predicted value;
second indication information; or
configuration information of the first preset event,
wherein the first indication information is used to indicate whether to support or allow obtaining of the first predicted value, and the second indication information is used to indicate a reporting requirement of the first predicted value.

63. The device according to claim 62, wherein the first indication information is associated with one or more of the following information:
frequency information;
PCI information;
measurement object information;
measurement identifier information;
measurement reporting configuration information; or
the configuration information of the first preset event.

64. The device according to claim 62 or 63, wherein the configuration information of the first preset event comprises event identifier information and/or event parameter information.

65. The device according to any one of claims 45 to 64, wherein at least one of the first predicted value aor the measured value is associated with one or more of the following parameters:
reference signal received power RSRP;
reference signal received quality RSRQ; or
a signal to interference plus noise ratio SINR.

66. The device according to any one of claims 45 to 65, wherein the first device is a terminal device or a network device.

67. A wireless communication device, wherein the device is a second device, and the device comprises:
a receiving unit, configured to receive first information transmitted by a first device, wherein the first information is used to indicate a first predicted value of a first cell, and the first cell is a current serving cell of a terminal device and/or a neighboring cell of the serving cell.

68. The device according to claim 67, wherein the first predicted value comprises a cell-level predicted value and/or a beam-level predicted value.

69. The device according to claim 68, wherein the first predicted value comprises one or more of the following information:
a predicted value at a current instant;
a predicted value at one or more past instants; or
a predicted value at one or more future instants.

70. The device according to claim 68 or 69, wherein the cell-level predicted value of the first cell at a first instant is determined based on one or more of the following information:
cell-level measured values and/or cell-level predicted values of the first cell at past K1 instants relative to the first instant;
measured values of a part of beams of the first cell and/or predicted values of a part of beams of the first cell at past K1 instants relative to the first instant; or
a measured value of a part of beams of the first cell and/or predicted value of a part of beams of the first cell at the first instant,
wherein K1 is a natural number greater than or equal to 1.

71. The device according to any one of claims 68 to 70, wherein the beam-level predicted value of the first cell at the first instant is determined based on one or more of the following information:
beam-level measured values of the first cell at past K2 instants relative to the first instant;
measured values of a part of beams of the first cell and/or predicted values of a part of beams of the first cell at past K2 instants relative to the first instant; or
a measured value of a part of beams of the first cell at the first instant,
wherein K2 is a natural number greater than or equal to 1.

72. The device according to claim 70 or 71, wherein the first instant is any one of one or more instants associated with the first predicted value.

73. The device according to any one of claims 70 to 72, wherein the K1 instants or the K2 instants meet one or more of the following conditions:
a time difference between any two adjacent instants is greater than or equal to a first threshold;
a time difference between any two adjacent instants is less than or equal to a second threshold;
a time difference between the first instant and a second instant in the K1 instants or the K2 instants is less than or equal to a third threshold;
a time difference between the first instant and a second instant in the K1 instants or the K2 instants is greater than or equal to a fourth threshold;
a time difference between the first instant and a third instant in the K1 instants or the K2 instants is less than or equal to a fifth threshold; or
a time difference between the first instant and a third instant in the K1 instants or the K2 instants is greater than or equal to a sixth threshold,
wherein the second instant is an instant in the K1 instants or the K2 instants that is farthest from the first instant, and the third instant is an instant in the K1 instants or the K2 instants that is closest to the first instant.

74. The device according to any one of claims 67 to 73, wherein if the first predicted value of the first cell comprises predicted values at past K3 instants before an instant when a first preset event is triggered, the K3 instants meet one or more of the following conditions:
a time difference between any two adjacent instants is greater than or equal to a seventh threshold;
a time difference between any two adjacent instants is less than or equal to an eighth threshold;
a time difference between a triggering instant of the first preset event and a fourth instant in the K3 instants is less than or equal to a ninth threshold;
a time difference between a triggering instant of the first preset event and a fourth instant in the K3 instants is greater than or equal to a tenth threshold;
a time difference between a triggering instant of the first preset event and a fifth instant in the K3 instants is less than or equal to an eleventh threshold; or
a time difference between a triggering instant of the first preset event and a fifth instant in the K3 instants is greater than or equal to a twelfth threshold,
wherein the fourth instant is an instant in the K3 instants that is farthest from the triggering instant of the first preset event, the fifth instant is an instant in the K3 instants that is closest to the triggering instant of the first preset event, and K3 is a natural number greater than or equal to 1.

75. The device according to any one of claims 67 to 74, wherein if the first predicted value of the first cell comprises predicted values at future K4 instants after an instant when the first preset event is triggered, the K4 instants meet one or more of the following conditions:
a time difference between any two adjacent instants is greater than or equal to a thirteenth threshold;
a time difference between any two adjacent instants is less than or equal to a fourteenth threshold;
a time difference between the triggering instant of the first preset event and a sixth instant in the K4 instants is less than or equal to a fifteenth threshold;
a time difference between the triggering instant of the first preset event and a sixth instant in the K4 instants is greater than or equal to a sixteenth threshold;
a time difference between the triggering instant of the first preset event and a seventh instant in the K4 instants is less than or equal to a seventeenth threshold; or
a time difference between the triggering instant of the first preset event and a seventh instant in the K4 instants is greater than or equal to an eighteenth threshold,
wherein the sixth instant is an instant in the K4 instants that is farthest from the triggering instant of the first preset event, the seventh instant is an instant in the K4 instants that is closest to the triggering instant of the first preset event, and K4 is a natural number greater than or equal to 1.

76. The device according to any one of claims 67 to 75, wherein the first predicted value is associated with the triggering instant of the first preset event, the first preset event comprises a first-type preset event, and the first-type preset event comprises one or more of the following events:
a measured value of the serving cell is greater than or equal to a nineteenth threshold;
a measured value of the serving cell is less than or equal to a twentieth threshold;
a difference between a measured value of the neighboring cell and a measured value of a primary cell or a primary secondary cell is greater than or equal to a first offset;
a measured value of the neighboring cell is greater than or equal to a twenty-first threshold;
a measured value of a primary cell or a primary secondary cell is less than a twenty-second threshold, and a measured value of the neighboring cell or a secondary cell is greater than a twenty-third threshold;
a difference between a measured value of the neighboring cell and a measured value of a secondary cell is greater than or equal to a second offset;
a distance between the terminal device and a first reference point is greater than or equal to a twenty-fourth threshold;
a distance between the terminal device and a second reference point is less than or equal to a twenty-fifth threshold;
a measured value of the neighboring cell is greater than or equal to a twenty-sixth threshold, and the neighboring cell and the serving cell are based on different radio access technologies;
a measured value of a primary cell is less than a twenty-seventh threshold, and a measured value of the neighboring cell is greater than a twenty-eighth threshold, wherein the neighboring cell and the serving cell are based on different radio access technologies;
a periodic measurement reporting timer expires;
a first absolute time instant is reached; or
a first time period has elapsed since successful reception of a measurement configuration.

77. The device according to claim 76, wherein the first preset event comprises a second-type preset event, and the second-type preset event comprises that the first-type preset event is predicted to occur within a second time period.

78. The device according to claim 76 or 77, wherein the first preset event comprises a third-type preset event, and the third-type preset event comprises that the first-type preset event is predicted to occur within the second time period; and the measured value of the serving cell is less than or equal to a twenty-ninth threshold.

79. The device according to any one of claims 76 to 78, wherein the first preset event comprises a fourth-type preset event, and the fourth-type preset event comprises that the first-type preset event is predicted to occur within the second time period and the measured value of the serving cell is less than or equal to a thirtieth threshold and lasts for a third time period.

80. The device according to any one of claims 67 to 79, wherein the first information is further used to indicate a measured value of the first cell.

81. The device according to any one of claims 67 to 80, wherein the first information is associated with absolute time information and/or relative time information.

82. The device according to any one of claims 67 to 81, wherein a configuration granularity of a parameter associated with the first predicted value comprises one or more of the following:
a frequency range granularity;
a carrier granularity;
a band granularity;
a band combination granularity;
a device type granularity; or
a cell granularity.

83. The device according to any one of claims 67 to 82, further comprising:
a transmitting unit, configured to transmit second information to the first device, wherein the second information is used to indicate configuration information associated with the first predicted value.

84. The device according to claim 83, wherein the second information comprises one or more of the following information:
first indication information;
one or more pieces of physical cell identity PCI information supporting or allowing obtaining of the first predicted value;
beam information supporting or allowing obtaining of a measured value;
beam information supporting or allowing obtaining of a predicted value;
second indication information; or
configuration information of the first preset event,
wherein the first indication information is used to indicate whether to support or allow obtaining of the first predicted value, and the second indication information is used to indicate a reporting requirement of the first predicted value.

85. The device according to claim 84, wherein the first indication information is associated with one or more of the following information:
frequency information;
PCI information;
measurement object information;
measurement identifier information;
measurement reporting configuration information; or
the configuration information of the first preset event.

86. The device according to claim 84 or 85, wherein the configuration information of the first preset event comprises event identifier information and/or event parameter information.

87. The device according to any one of claims 67 to 86, wherein at least one of the first predicted value or the measured value is associated with one or more of the following parameters:
reference signal received power RSRP;
reference signal received quality RSRQ; or
a signal to interference plus noise ratio SINR.

88. The device according to any one of claims 67 to 87, wherein the second device is a terminal device or a network device.

89. A wireless communication device, comprising a memory and a processor, wherein the memory is configured to store a program, and the processor is configured to invoke the program in the memory to execute the method according to any one of claims 1 to 22.

90. A wireless communication device, comprising a memory and a processor, wherein the memory is configured to store a program, and the processor is configured to invoke the program in the memory to execute the method according to any one of claims 23 to 44.

91. A wireless communication device, comprising a processor, configured to invoke a program from a memory to execute the method according to any one of claims 1 to 22.

92. A wireless communication device, comprising a processor, configured to invoke a program from a memory to execute the method according to any one of claims 23 to 44.

93. A chip, comprising a processor, configured to invoke a program from a memory to cause a device installed with the chip to execute the method according to any one of claims 1 to 22.

94. A chip, comprising a processor, configured to invoke a program from a memory to cause a device installed with the chip to execute the method according to any one of claims 23 to 44.

95. A computer-readable storage medium, wherein the computer-readable storage medium stores a program, and the program causes a computer to execute the method according to any one of claims 1 to 22.

96. A computer-readable storage medium, wherein the computer-readable storage medium stores a program, and the program causes a computer to execute the method according to any one of claims 23 to 44.

97. A computer program product, comprising a program, wherein the program causes a computer to execute the method according to any one of claims 1 to 22.

98. A computer program product, comprising a program that causes a computer to execute the method according to any one of claims 23 to 44.

99. A computer program, wherein the computer program causes a computer to execute the method according to any one of claims 1 to 22.

100. A computer program, wherein the computer program causes a computer to execute the method according to any one of claims 23 to 44.
